# EUROPEAN PATENT APPLICATION

(11) **EP 2 090 452 A1**
(43) Date of publication of application: **19.08.2009**
(21) Application number: 07850222.6
(22) Date of filing: 06.12.2007
(51) Int. Cl.: B60K 5/12, B62D 37/04, F16F 15/02

(54) **VIBRATION DAMPING DEVICE, METHOD OF CONTROLLING VIBRATION DAMPING DEVICE, METHOD OF CORRECTING OFFSET OF VIBRATION DAMPING DEVICE, AND LEAF SPRING**

(30) Priority: 06.12.2006 JP 2006329495; 06.12.2006 JP 2006329497; 05.04.2007 JP 2007099468; 05.04.2007 JP 2007099469; 10.05.2007 JP 2007125666
(71) Applicant: Sinfonia Technology Co., Ltd., Tokyo 105-8564 (JP)
(72) Inventor: MURAGISHI, Yasushi, Ise-shi Mie 516-8550 (JP); FUJII, Takayoshi, Ise-shi Mie 516-8550 (JP); FUKUNAGA, Takashi, Ise-shi Mie 516-8550 (JP); MORIYA, Hideaki, Ise-shi Mie 516-8550 (JP); NAKANO, Katsuyoshi, Ise-shi Mie 516-8550 (JP); NAKAGAWA, Hiroshi, Ise-shi Mie 516-8550 (JP); ONOUE, Takashi, Ise-shi Mie 516-8550 (JP); SATO, Yushi, Ise-shi Mie 516-8550 (JP)
(74) Representative: Khan, Mohammed Saiful Azam
(86) International application number: PCT/JP2007/073613
(87) International publication number: WO 2008/069282

(57) **Abstract**

An automobile vibration damping device for an automobile in which a power plant in which an engine, a transmission and the like are combined is supported by a vehicle body, including a vibrating means that generates vibration separate from vibration of the engine. Thereby, it is possible to reduce the vibration amplitude of a seat portion by the reaction force of the vibrating means. Also, if the vibration mode of the vehicle body is adjusted so as to become a node in the vicinity of the seat portion, the vibration amplitude decreases in the vicinity of the seat portion, and improves riding comfort.

## Description

### TECHNICAL FIELD

The present invention relates to an automobile vibration damping device that reduces the vibration amplitude of a seat portion and a steering wheel portion in a vehicle in which an engine is mounted, such as an automobile, and improves riding comfort.

Also, the present invention relates to a vibration damping device that performs vibration suppression control of a vibration damping target device of an automobile or the like and a control method for the vibration control device.

Also, the present invention relates to an offset correction method for a vibration damping device.

Also, the present invention relates to a blade spring that is provided in a linear actuator.

Priority is claimed on Japanese Patent Application No. 2006-329495, filed December 6, 2006, Japanese Patent Application No. 2006-329497, filed December 6, 2006, Japanese Patent Application No. 2007-99468, filed April 5, 2007, Japanese Patent Application No. 2007-99469, filed April 5, 2007, and Japanese Patent Application No. 2007-125666, filed May 10, 2007, the content of which is incorporated herein by reference.

### BACKGROUND ART

Generally, a power plant that combines an engine and a transmission or transaxle and the like is supported by an engine mount with the object of cutting off high-frequency vibration. Meanwhile, at times such as during stopping of an automobile, the engine idles, but in order to be operated at low speeds, compared to when running, in addition to the torque fluctuations being large, low-frequency vibration occurs, and due to vibration of the engine that is transmitted via the engine mount, vehicle body vibration is generated. Due to this low-frequency vibration being transmitted to the occupant via the floor, the riding comfort of the occupant is inhibited.

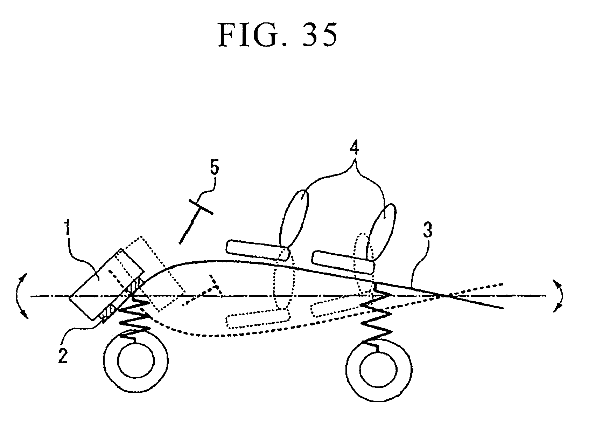

When described in specifics using drawings, FIG. 35 schematically shows vehicle body vibration during the idling operation. Here, a power plant 1 such as an engine is supported by a vehicle body 3 via an engine mount 2. However, when the frequency of the excitation force such as at the time of idling is low, the vibration cut-off performance of the engine mount 2 may be insufficient. In such a case, the vehicle body 3 as shown by the broken line in the drawing vibrates greatly, and the seat portion 4 and the steering wheel portion 5 deform, and riding comfort worsens. Also, a low-frequency booming noise is generated. Furthermore, although the vehicle body structure is regarded as a rigid body in an extremely low vibration frequency region, when the vibration frequency becomes several dozen c./sec, it must be considered as an elastic body.

Also, in order to improve the characteristics of the engine mount, the devices shown in Patent Document 1 and Patent Document 2 have been proposed. The vibration control device disclosed in Patent Document 1 is coupled by a spring means in a manner allowing relative motion, has magnets attached to one end of a member, and oppositely disposes a conductive member that extends through the magnetic field to another member to improve the damping factor. Also, the vibration control mount that is disclosed in Patent Document 2 arranges an elastic body made of rubber, magnets, and a conductor, and dampens vibrations by using the eddy current resistance that occurs when the conductor cuts through the magnetic field.

Moreover, in order to reduce the transmission of vibration to the vehicle body during low-speed rotation and high-speed rotation of the engine, a vibration control device for a vehicle as disclosed for example in Patent Document 3 has been proposed. This device provides permanent magnets and a wire that crosses the magnetic field of the permanent magnets in a vibration control device that is supported by rubber elastic bodies, and in the vibration damping region that is the low-frequency region, the wire is closed with a switch to increase the spring constant, and in the vibration prevention region that is the high-frequency region, the wire is opened to reduce the spring constant and reduce the damping coefficient.

Also, there is conventionally known a vehicle vibration control device that uses an actuator that generates a damping force in accordance with the engine speed by utilizing the reaction force from driving a movable portion (for example, refer to Patent Document 4). According to this device, since it makes a prediction from the vehicle body vibration engine speed and can offset the force applied to the vehicle body from the engine, it can reduce the vibration of the vehicle body. This kind of vibration damping device uses a linear actuator that performs reciprocal movement, and reduces the vibration of a vibration damping target by causing an auxiliary mass to vibrate.

On the other hand, as a linear actuator, there is known a linear actuator in which a elastic support portion (blade spring) holds a movable element at a fixed position and supports the movable element by elastically deforming itself (for example, refer to Patent Document 5). In this linear actuator, since abrasion and sliding resistance do not occur at the movable element, even after use over a long period, high reliability is obtained without a reduction in accuracy of the axial support, and it is possible to achieve an improvement in performance without a power consumption loss caused by sliding resistance. Also, by supporting the elastic support portion by the stator at a father position that the coils using the movable element as a base point while interference with the coils is avoided, it is possible to arrange the bulky coils and the elastic support portion in closer proximity, and so possible to achieve a reduction in size of the linear actuator.

Also, various linear actuators provided with a stator and a movable element have conventionally been used (for example, refer to Patent Documents 5 to 7).

Among these linear actuators, there is known a device in which is provided a figure-eight shaped blade spring that supports a stator and a movable element in a reciprocating manner. It is coupled to one of the stator or the movable element at the center portion of the figure-eight shape, and screwed to the other of the stator or movable element at both end portions of the figure-eight shape.
[Patent Document 1] Japanese Unexamined Patent Application No. S63-149446
[Patent Document 2] Japanese Utility Model Application No. H04-113348
[Patent Document 3] Japanese Utility Model Application No. S59-68838
[Patent Document 4] Japanese Unexamined Patent Application No. S61-220925
[Patent Document 5] Japanese Unexamined Patent Application No. 2004-343964
[Patent Document 6] Japanese Unexamined Patent Application No. 2003-339147
[Patent Document 7] Japanese Unexamined Patent Application No. 2005-130646

However, the following problems are present in the conventional automobile vibration damping devices.
(1) In a device that improves the spring performance of the engine mount such as shown in Patent Documents 1 and 2, it is difficult to effectively cut off low-frequency vibration during idling operation and high-frequency vibration during high speed operation.
(2) Also, in a device that dampens vibrations by selectively changing by a switch between two spring constants as illustrated in Patent Document 3, due to the engine revolutions continuously changing from a low speed to a high speed, there exists a region in which vibrations cannot be cut off, and so vibrations are produced in the vehicle body and transmitted to the occupants via the floor panel so that riding comfort is inhibited.

The present invention was achieved in view of the above circumstances, and has as its first object to arrange a vibrating means at a position different from the engine mount and, by performing adjustment so that the steering wheel portion and the seat portion become a node of vibration, reduce the vibration amplitude and improve the riding comfort.

Also, in the case of reducing the vibration of the body of an automobile by utilizing the linear actuator disclosed in Patent Document 4, it is necessary to have the direction of the vibration to be reduced and the direction of the vibration of the auxiliary mass that is supported by the linear actuator agree. In the case of the direction of the vibration to be reduced being the same direction as the direction of gravity, it is necessary to vibrate the auxiliary mass by making the movable element of the linear actuator perform reciprocal movement in the gravity direction (vertical direction). In this case, a phenomenon (shift of origin) occurs in which the movable element shifts from its neutral position by the self weight of the auxiliary mass. When this shift of origin happens, the follows problems occur when performing vibration damping control.
(1) Due to the shift of the neutral position (initial position) of the movable element, the vibration amplitude on one side (in the gravity direction) becomes large by driving in the shifted state, and excessive stress acts on the blade spring, leading to the possibility of exceeding the allowable vibration amplitude limit of the blade spring. For this reason, the possibility of breakage of a blade spring becomes high and the reliability of the entire linear actuator falls.
(2) Since the controlling force (reaction force) arising from causing the auxiliary mass to vibrate is determined by mass and acceleration, which is determined by the movable range (stroke), when the movable range of the movable element is restricted, the required controlling force cannot be output, and so the vibration damping effect ends up being insufficient.
(3) Since nonlinearity of a blade spring increases as the stroke becomes large, if an initial position shifts, it will leave the linear region of a blade spring, and so vibration damping control will become difficult.
   On the other hand, in order to correct the shift of origin, the method of providing a new spring in the linear actuator and rectifying the shift of origin has the following problems.
(4) When mounted in an automobile, since the attachment space is confined, it is necessary to make the height in the stroke direction small, but if the external spring is series aligned in the stroke direction of the movable element, the size of the vibration damping device becomes longer (higher) in the stroke direction.
(5) Since the resonance magnification is high and the phase change of the vibration amplitude of the movable portion with respect to the instruction is also large in the vicinity of the characteristic frequency of the vibration damping device, control thus is easier as the characteristic frequency of the control target (vehicle body) and the characteristic frequency of the vibration damping device become separated. Also, since the frequency of the excitation force (engine vibration) is in the upper range from the idling frequency, control is easier when the characteristic frequency of the vibration damping device is made lower than the idling frequency. However, by adding an external spring, the characteristic frequency of the entire vibration damping device goes up, and approaches, or enters, the frequency range of the control target, thereby impairing controllability.

The present invention was achieved in view of the above circumstances, and has as its second object to provide a vibration damping device that can correct the shift of the neutral position of a movable element by the self weight of an auxiliary mass, and a method of controlling the vibration damping device.

Also, in the constitution of the above-mentioned conventional blade spring, since both end portions of the figure-eight shape are coupled, the contact surface area with the attachment portion of the stator or the movable element is small, and so a deviation arises in the pressure distribution. For that reason, there is the problem of not being able to properly hold the stator and the movable element.

The present invention was achieved in view of the above circumstances, and has as its third object to provide a blade spring that is capable of making a movable element favorably perform reciprocal movement over a long period of time.

### DISCLOSURE OF THE INVENTION

The present invention is an automobile vibration damping device for an automobile in which a power plant in which an engine, a transmission and the like are combined is supported by a vehicle body with an engine mount with the object of cutting off vibration, provided with a vibrating means that generates vibration separate from vibration of the engine.

This vibrating means may be arranged at a separate position from the engine that is supported by the engine mount. Also, the vibrating means may be provided in a plurality. Also, the vibrating means may vibrate an auxiliary mass that is attached to a linear actuator.

Also, the vibrating means may operate when the engine is idling and the vehicle speed is zero.

Also, the vibrating means may be attached to a vehicle body frame. Also, the vibrating means may be attached to the rear end portion of a vehicle body frame. Also, the vibrating means may be attached to a bumper attachment portion. Also, the vibrating means may be attached to the inside of a bumper. Also, the vibrating means may be attached to the inside of a trunk. Also, the vibrating means may be attached to below a seat.

Also, two of the vibrating means may be installed and driven with mutually independent phases. Also, a plurality of the vibrating means may be installed and driven with mutually independent phases.

Also, a reference signal of a vibration signal may be any of an ignition current, a distributor current, a spark plug current, an engine speed pulse, an engine vibration waveform, and fuel injection timing. Also, the vibrating means may be driven with a predetermined time lag with respect to a reference signal of a vibration signal. Also, the excitation force of the vibrating means may be changed by any of an accelerator opening degree, a change in the air intake amount, a fuel injection amount and the engine speed. Also, driving of the vibrating means may be stopped with a predetermined engine speed serving as an upper limit. Also, the predetermined engine speed may be 1,500 rpm. Also, driving of the vibrating means may be stopped outside a predetermined engine speed range. Also, a lower limit value of the predetermined engine speed may be 500 to 1,200 rpm, and an upper limit value may be 1,400 to 4,000 rpm.

Also, the auxiliary mass may be a component part of the automobile that is supported by a spring element with respect to the vehicle body of the automobile, and the component part may vibrate by the linear actuator. Also, the component part may be any of a radiator, a tank, and a battery. Also, the auxiliary mass may be an accessory of the automobile that is supported by a spring element with respect to the vehicle body of the automobile, and the accessory may vibrate by the linear actuator. Also, the accessory may be either of a spare tire and a tool.

Also, the vibrating means may be attached to the vehicle body frame in the vicinity of the engine mount or directly under the engine mount.

Also, the reference signal of the vibration signal may be input via a communication network that is provided in the automobile.

Also, the present invention is an automobile vibration damping device for an automobile in which a power plant in which an engine, a transmission and the like are combined is supported by a vehicle body with an engine mount with the object of cutting off vibration, provided with a vibrating means for vibrating an auxiliary mass that is supported by an actuator in a direction that is perpendicular to the direction of vibration of the vehicle body; and a control means for controlling the operation of the actuator.

A plurality of the vibrating means may be arranged. Also, the vibrating means may operate when the engine is idling and the vehicle speed is zero.

Also, the vibrating means may be attached to a vehicle body frame. Also, the vibrating means may be attached to the rear end portion of a vehicle body frame. Also, the vibrating means may be attached to a bumper attachment portion. Also, the vibrating means may be attached to the inside of a bumper. Also, the vibrating means may be attached to the inside of the trunk. Also, the vibrating means may be attached to below a seat.

Also, two of the vibrating means may be installed and driven with mutually opposite phases. Also, a plurality of the vibrating means may be installed and driven with mutually different phases.

Also, the control means may control the operation of the actuator based on a reference signal of any of an ignition current, a distributor current, a spark plug current, an engine speed pulse, an engine vibration waveform, and fuel injection timing.

Also, the vibrating means may be driven with a predetermined time lag with respect to the reference signal. Also, the vibration force of the vibrating means may be changed by an accelerator opening degree, a change in the air intake amount, and a fuel injection amount. Also, driving of the vibrating means may be stopped with a predetermined engine speed serving as an upper limit. Also, the predetermined engine speed may be 1,500 rpm. Also, driving of the vibrating means may be stopped outside a predetermined engine speed range. Also, a lower limit value of the predetermined engine speed may be 500 to 1,200 rpm, and an upper limit value may be 1,400 to 4,000 rpm. Also, the vibrating means may be attached in the vicinity of the engine mount.

Also, the auxiliary mass that is supported in the actuator may be a component part or accessory of the automobile that is supported by a spring element with respect to the vehicle body.

Also, the present invention is a provided with: an auxiliary mass member that is supported by a spring element; an actuator that drives the auxiliary mass member; a control means that outputs to the actuator a control signal for performing vibration control using a reaction force in the case of driving the auxiliary mass member with the actuator; and an offset correcting means that adds to the control signal a direct current that corrects the shift in the neutral position of the actuator due to the self weight of the auxiliary mass.

Also, the present invention is a control method for a vibration damping device comprising an auxiliary mass member that is supported by a spring element; an actuator that drives the auxiliary mass member; and a control means that outputs to the actuator a control signal for performing vibration control using a reaction force in the case of driving the auxiliary mass member with the actuator; adding to the control signal a direct current that corrects the shift in the neutral position of the actuator due to the self weight of the auxiliary mass.

Also, the present invention is vibration damping device provided with: a stator; a movable element having an iron member and provided so as to be capable of reciprocal movement with respect to the stator, with an auxiliary mass member joined to one end; permanent magnets providing magnetic poles opposed to the iron member and orthogonal to the direction of the reciprocal movement and provided at the stator along the direction of the reciprocal movement; a movable element support means that supports the movable element by a spring element; coils that are provided on the stator; and a control means that controls an electric current applied to the coils in order to suppress vibration of a vibration damping target using a reaction force when the auxiliary mass member is driven; in which the permanent magnets are constituted to be arranged closer to the upper side of an axial direction position in a reciprocal movement range of the iron member and not arranged at the lower side, so that a magnetomotive force is unsymmetrically formed.

Also, the present invention is an offset correcting method for a vibrating damping device provided with: a stator; a movable element having an iron member and provided so as to be capable of reciprocal movement with respect to the stator, with an auxiliary mass member joined to one end; permanent magnets providing magnetic poles opposed to the iron member and orthogonal to the direction of the reciprocal movement and provided at the stator along the direction of the reciprocal movement; a movable element support means that supports the movable element by a spring element; coils that are provided on the stator; and a control means that controls an electric current applied to the coils in order to suppress vibration of a vibration damping target using a reaction force when the auxiliary mass member is driven; in which the permanent magnets are constituted to be arranged closer to the upper side of an axial direction position in a reciprocal movement range of the iron member and not arranged at the lower side, so that a magnetomotive force is unsymmetrically formed.

Also, the present invention is a blade spring that elastically supports a stator and a movable element of a linear actuator coaxially and concentrically and in a manner enabling reciprocal movement, provided with: an inner annular portion that is fixed to the stator or the movable element; an outer annular portion that is provided at the outer periphery of the inner annular portion; and an arm portion that connects the inner annular portion and the outer annular portion in an inner region of the outer annular portion and elastically deforms so that the stator or the movable element moves in a reciprocating manner.

The arm portion may be annularly formed. Also, a plurality of the arm portions may be provided and symmetrically arranged sandwiching the inner annular portion.

### Effects of the Invention

Since this invention has the aforementioned constitution, it can exhibit the effects described below.

It is an automobile vibration damping device for an automobile in which a power plant in which an engine, a transmission and the like are combined is supported by a vehicle body with an engine mount with the object of cutting off vibration. Since it is provided with a vibrating means that generates vibration separate from vibration of the engine, it is possible to reduce the vibration amplitude of a seat portion by the reaction force of the vibrating means. Also, if the vibration mode of the vehicle body is adjusted so as to become a node in the vicinity of the seat portion, the vibration amplitude decreases in the vicinity of the seat portion, and improves riding comfort.

Also, since the vibrating means is arranged at a separate position from the engine that is supported by the engine mount, it is possible to easily change the vibration mode of the vehicle body, and by adjusting to become a node in the vicinity of the seat portion, it is possible to reduce in-vehicle vibrations.

Also, since the vibrating means is provided in a plurality, in addition to vibration reduction of the seat portion in a wagon-type automobile with a wide loading-platform area, it is possible to reduce vibration generated in the loading platform portion and significantly reduce low-frequency noise. Also, since the vibrating means vibrates an auxiliary mass that is attached to a linear actuator, it is possible to obtain high reliability even under severe driving conditions with the movable portion simply being an iron core. Also, it is possible to use maintenance free over a long period since there are no chafing or wearing portions. Also, since the vibrating means operates when the engine is idling and the vehicle speed is zero, it is possible to reliably reduce low-frequency vibration during idling.

Also, since the vibrating means that generates vibration separate from vibration of the engine is provided, it is possible to reduce the vibration amplitude of the seat portion by the reaction force of the vibrating means. Also, by adjusting the vibration mode of the vehicle body so as to become a node in the vicinity of the seat portion to reduce the vibration amplitude in the vicinity of the seat portion, it is possible to attain the object of improves riding comfort.

Also, it is an automobile vibration damping device for an automobile in which a power plant in which an engine, a transmission and the like are combined is supported by a vehicle body with an engine mount with the object of cutting off vibration. Since it is provided with a vibrating means for vibrating an auxiliary mass that is supported by an actuator in a direction that is perpendicular to the direction of vibration of the vehicle body and a control means for controlling the operation of the actuator, even if a large vertical vibration is received when the automobile travels on bad roads, without becoming a force in the driving direction of the actuator (vibrating direction of the auxiliary mass), the auxiliary mass that is fixed to the actuator is prevented from being vibrated beyond the movable range. For that reason, it becomes possible to perform optimal vibration damping, and it is possible to improves riding comfort.

Also, since the fact that a direct current that corrects a shift in the neutral position of the actuator due to the self weight of the auxiliary mass is added to the control signal, it is possible to always drive the movable element of the actuator within the regular stroke range. Thereby, it is possible to generate the required controlling force, and it becomes possible to reduce vibration without impairing the performance of vibration damping control. Also, since it becomes possible to make it operate within the range of positive current by adjusting the magnitude of the direct current, a single-sided power supply is possible, and so it is possible to achieve a cost reduction in the power supply and power amplifier.

Also, by providing the permanent magnets only above the stroke direction of the movable element and utilizing the unbalance of the magnetomotive force by the permanent magnets to counteract a shift in the neutral position by the self weight of the auxiliary mass, it is possible to drive the movable element of the actuator within the regular stroke range. Thereby, it is possible to generate the required controlling force, and it is possible to reduce vibration without impairing the performance of vibration damping control.

Also, since it can be fixed along the entire circumference of the outer annular portion, it is possible to enlarge the retaining area, and it is possible to make the pressure distribution uniformity due to the support uniform. For that reason, it is possible to make the movable element favorably perform reciprocal movement over a long period of time.

### BRIEF DESCRIPTION OF THE DRAWINGS

FIG. 1 is a schematic view that shows one example of a vehicle body to which is attached the automobile vibration damping device according to the present invention.
FIG. 2 is a schematic diagram showing an example of reducing the vibration of a vehicle body with the same automobile vibration damping device.
FIG. 3 is a schematic diagram showing an example of reducing vehicle body vibration in the case of attaching the same automobile vibration damping device to the front and rear of a vehicle body.
FIG. 4 is an explanatory diagram that shows one example of the vibrating means used for the automobile vibration damping device of the present invention.
FIG. 5 is a schematic diagram that shows one example of a vehicle body to which is attached the automobile vibration damping device according to the present invention.
FIG. 6 is an explanatory diagram that shows one example of the vibrating means that is used in the automobile vibration damping device of the present invention.
FIG 7 is an explanatory diagram that shows one example of the vibrating means that is used in the automobile vibration damping device of the present invention.
FIG. 8 is an explanatory diagram that shows one example of the vibrating means that is used in the automobile vibration damping device of the present invention.
FIG. 9 is a block drawing that shows the constitution of one embodiment of the vibration damping device of the present invention.
FIG. 10 is a diagram that shows the state of shift of the point of origin.
FIG. 11 is an explanatory view that shows the control signal to which is added a direct current for offset correction.
FIG. 12 is a front view that shows the linear actuator according to the present invention.
FIG. 13 is a partially broken perspective view of the linear actuator.
FIG. 14 is a longitudinal cross-sectional view of the linear actuator.
FIG. 15 is a exploded perspective view that shows one example of an outer movable linear actuator according to the present invention.
FIG. 16 is an overall perspective view of the same outer movable linear actuator.
FIG. 17 is a cross-sectional view of the same outer movable linear actuator.
FIG. 18 is an enlarged cross-sectional view of the essential portions of the same outer movable linear actuator.
FIG. 19 is an overall perspective view of the stator.
FIG. 20 is an exploded perspective view of the stator.
FIG. 21 is a perspective view that shows the insulator.
FIG. 22 is a rear view that shows the same insulator.
FIG. 23 is a longitudinal cross-sectional view that shows the same insulator.
FIG. 24 is an exploded perspective view showing the second embodiment of the stator.
FIG. 25 is a longitudinal cross-sectional diagram of the same stator.
FIG. 26 is an explanatory view that shows the procedure of attaching the permanent magnets in the second embodiment.
FIG. 27 is a longitudinal cross-sectional view that shows a third embodiment of the stator.
FIG. 28 is an exploded perspective diagram of the same stator.
FIG. 29 is an explanatory diagram that shows the assembly procedure of the same outer movable linear actuator.
FIG. 30 is an explanatory diagram that shows the assembly procedure of the same outer movable linear actuator.
FIG. 31 is an explanatory view that shows the assembly procedure of the same outer movable linear actuator.
FIG. 32 is a front view of FIG. 30.
FIG. 33 is a cross-sectional view along line B-B in FIG. 32.
FIG. 34 is a front view of FIG. 31.
FIG. 35 is an explanatory diagram that schematically shows the conventional vehicle body vibration mode during idling operation.

### Description of Reference Numerals

10 automobile vibration damping device, 11 power plant, 12 engine mount, 13 vehicle body, 14 vibrating means, 15 steering wheel, 16 seat portion, 17 suspension, 18 tire, 19 reciprocating motor, 20 auxiliary mass, 21 second vibrating means, 23a, 23b rubber vibration isolators (spring elements).

### BEST MODE FOR CARRYING OUT THE INVENTION

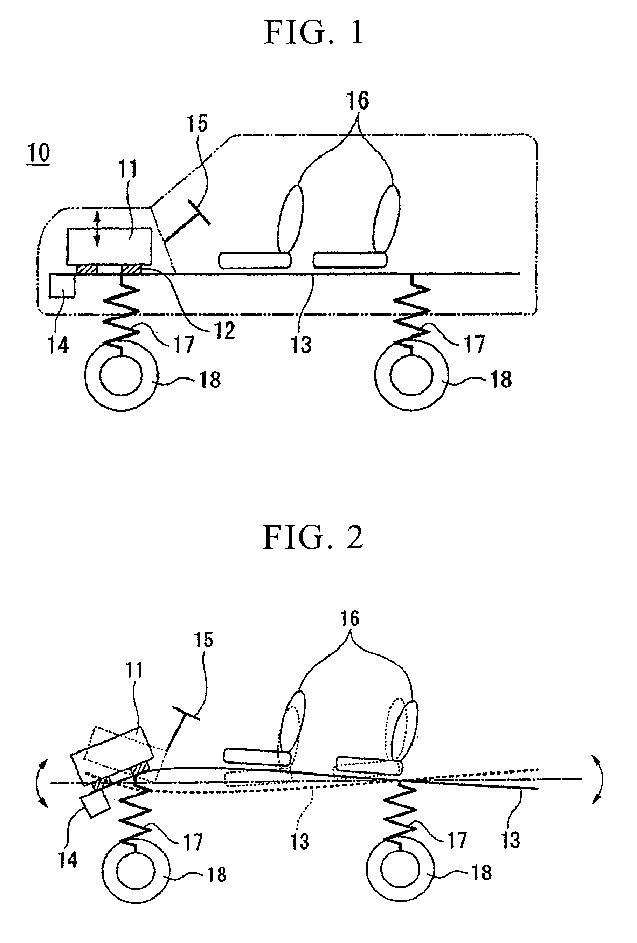

The preferred embodiments for carrying out the automobile vibration damping device of the present invention shall be described with reference to the drawings. FIG. 1 is a schematic diagram that shows one example of a vehicle body to which is attached the automobile vibration damping device according to the present invention.

Here, an automobile vibration damping device 10 is one in which a power plant 11 that combines the engine and transmission and the like is supported by a vehicle body 13 with an engine mount 12 with the object of cutting off vibration, and is provided with a vibrating means 14 that generates a separate vibration from the vibration of the engine. Moreover, a steering wheel 15 and a seat portion 16 are attached to the vehicle body 13. Furthermore, the vehicle body 13 is supported with tires 18 via a suspension 17.

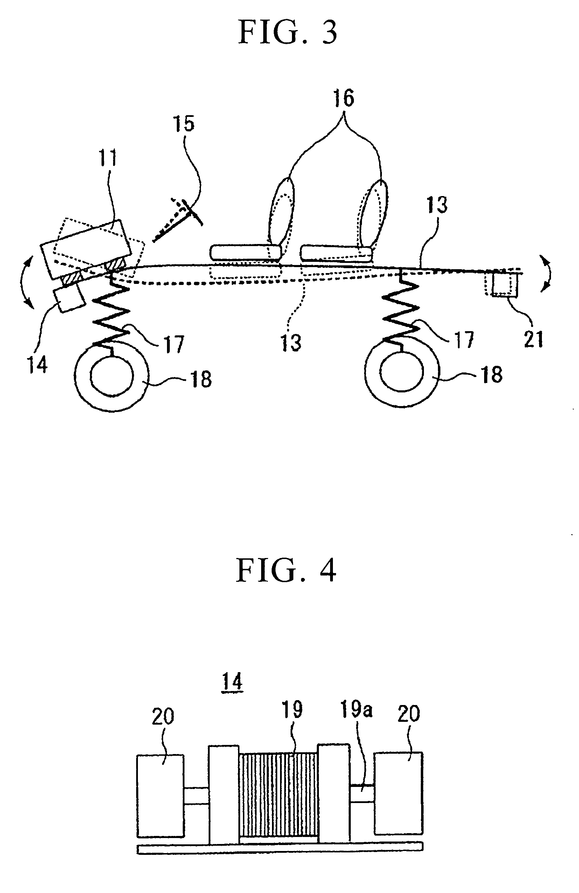

The vibrating means 14 that is used in the present embodiment is fixed directly to the vehicle body 13 at a separate position from the engine without being interposed by the engine mount 12. Fotermore, as the vibrating means 14, it is possible to use a linear actuator, a reciprocating motor, a voice coil motor, a moving magnet, and the like. FIG. 4 shows one example of the vibrating means 14 used for the automobile vibration damping device of the present invention, in which an auxiliary masse 20 is attached to both ends of a movable axis 19a of a reciprocating motor 19. In the state in which the coil is not electrified, the movable element of the reciprocating motor 19 is stationary at the neutral position of a motor by the magnetic force of a permanent magnet, and when electrified, the movable element moves in a reciprocating manner. Moreover, the only moving portion of the reciprocating motor 19 is the iron core, the mechanical strength thereof is high, and since there is no need to supply power to the movable portion, there is no possibility of disconnection and the like.

FIG. 2 is a schematic diagram showing an example of reducing the vibration of a vehicle body by the automobile vibration damping device of the present invention. In the present embodiment, the movement velocity of the vibrating means 14 and the auxiliary mass 20 are adjusted so that the vibration mode of the vehicle body 13 becomes a node in the vicinity of the sear portion 16, or the vibration amplitude reduces. The vibration phenomenon in the low vibration frequency region of the vehicle body 13 is generally called shake, and as the vibration modes, there is primary vibration (two node bending) and secondary vibration (three node bending), however FIG. 2 shows the case of two node bending due to the primary vibration. Also, the timing for activating the vibrating means 14 is when the engine is in idling (no load) operation and the vehicle speed is zero (stopped).

In the case of being constituted in the above manner, the vibration amplitude of the seat portion 16 reduces as shown in FIG. 2, and it is possible to improve the riding comfort.

FIG. 3 is a schematic diagram showing the example of a reduction of the vehicle body vibration in the case of attaching the automobile vibration damping device of the present invention to the front and rear of the vehicle body 13. In the present embodiment, along with attaching the vibrating means 14 to the front portion of the vehicle body 13, a second vibrating means 21 is attached to the rear portion. The vibrating means 14 mainly reduces the vibration amplitude of the seat portion 16 and improves the riding comfort, while the second vibrating means 21 mainly has as its object reduction of the cabin noise by reducing the vibration amplitude of the loading platform portion. The present embodiment can be applied to an wagon-type automobile and the like with a wide loading-platform area, and in addition to vibration reduction of the seat portion, can reduce vibration generated in the loading platform portion and can sharply reduce low-frequency noise.

Note that in the present embodiment, the case of installing one or two vibrating means is described, but three or more may also be installed.

In addition, the location of attaching the vibrating means used in the present embodiment may be at the front end portion or the rear end portion the vehicle body frame, at a bumper attachment portion or inside of a bumper, in the trunk, or below a seat. Also, the vibrating means may be mounted on the vehicle body frame in the vicinity of the engine mount or directly under the engine mount.

Moreover, as a specific example of the drive signals, a plurality of vibrating means may be installed and driven with mutually different phases, such as installing two vibrating means and driving them with mutually opposite phases. Also, the reference signal of the vibration signal may be any of an ignition current, a distributor current, a spark plug current, an engine speed pulse, an engine vibration waveform, or a fuel injection timing. Moreover, the vibrating means may be driven by applying a predetermined time lag with respect to the reference signal of the vibration signal.

Note that the reference signal of the vibration signal may be input via an in-car communication network, such as CAN (Controller Area Network), that is provided in the automobile. By doing so, it eliminates the need to extend a new signal lines in the vehicle.

Furthermore, the vibration force of the vibrating means may be changed by the accelerator opening degree, a change in the air intake amount, the fuel injection amount and the engine speed. Also, driving of the vibrating means may be stopped with a predetermined engine speed (under an engine speed limit) such as 1,500 rpm serving as an upper limit.

Moreover, driving of the vibrating means may be stopped outside of a predetermined range of engine speeds. At this time, assuming the lower limit of the engine speed to be 500 to 1,200 rpm, and the upper limit to be 1,400 to 4,000 rpm, the setting may be made based on the extent of the vibrations generated in accordance with the engine speed of the automobile.

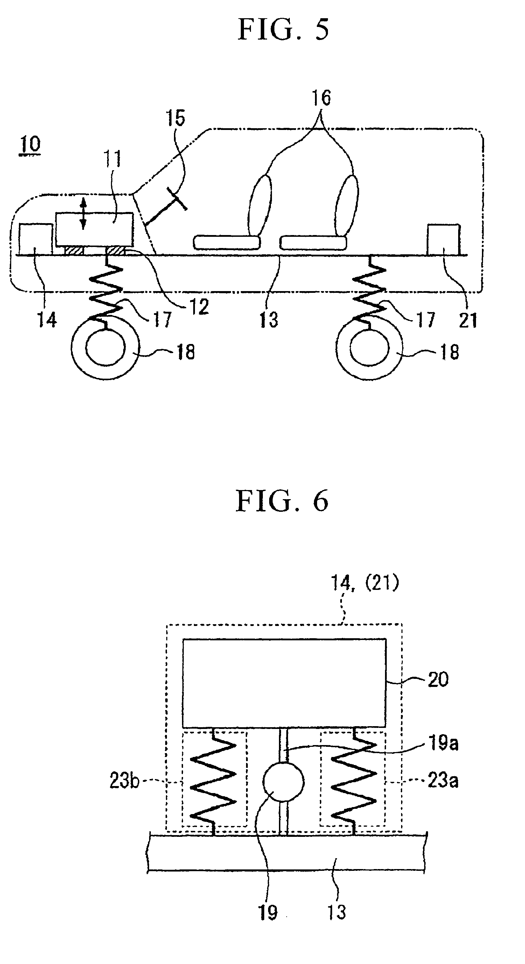

Next, modifications of the vibrating means shall be described with reference to FIG. 5. FIG. 5 is a schematic view showing an example of a vehicle body to which is attached the automobile vibration damping device according to the present invention. Note that in the following drawings, portions that are the same as the automobile vibration damping device shown in FIG. 1 are denoted by the same reference numerals, and explanations thereof shall be omitted. The automobile vibration damping device shown in FIG. 5 differs from the device shown in FIG. 1 on the point of the vibrating means 14 being provided at the front of the vehicle body 13, the second vibrating means 21 being provided at the back of the vehicle body 13, and the point of using components of the automobile in the auxiliary mass 20 of each vibrating means 14 and 21.

Here, the constitution of the vibrating means 14 and the second vibrating means 21 shown in FIG. 5 shall be described with reference to FIG. 6. FIG. 6 is a drawing that shows the constitution of the vibrating means 14 and the second vibrating means 21 shown in FIG. 5. The reciprocating motor 19 is fixed to the vehicle body 13 with the auxiliary mass 20 attached to the movable axis 19a so that the direction of vibration of the vehicle body 13 to be suppressed agrees with the direction of reciprocal motion (thrust direction) of the movable axis 19a. The auxiliary mass 20 is supported by spring elements 23a, 23b such as rubber vibration isolators, with respect to the vehicle body 13, and is constituted to be capable of moving in a reciprocating manner in the thrust direction of the movable axis 19a. Component parts and accessories that are provided in the automobile are used for this auxiliary mass 20.

Component parts and accessories mentioned here refer to components that can be supported by an elastic body on the vehicle body 13. For example, such component parts include the radiator, fuel tank, liquid reserve tanks for coolant or washing liquid, and a battery and the like. Although the radiator must be connected with a pipe that supplies cooling water to the engines, if an elastic pipe is used for this pipe, it is possible to make the radiator body vibrate by the reciprocating motor 19. Moreover, in a liquid tank as well, by constituting a pipe that supplies a liquid with an elastic body, it can be made to vibrate. Furthermore, if elasticity is imparted to the electrical wires of the battery, it is possible to vibrate the main body of the battery by the reciprocating motor 19.

Moreover, accessories refer not to parts that are indispensable for operation of the automobile, but rather to parts that are added adjunctively, for example, a spare tire and a tool (or tool box into which tools are put). As for these accessories, since there is absolutely no problem to operate the automobile even if they are supported by an elastic body on the vehicle body, it is possible to support these accessories on the vehicle body 13 with an elastic body, and to make them vibrate by the reciprocating motor 19.

Note that FIG. 5 shows the example of providing two vibrating means (the vibrating means 14 and the second vibrating means 21), but either one may be provided. Also, three or more vibrating means may also be provided.

In this way, when components that are provided in the vehicle and accessories that are always attached are used as an auxiliary mass, since the need for the auxiliary mass 20 to be provided within the automobile vibration damping device 10 can be eliminated, it is possible to lessen the weight increase in the case of attaching the automobile vibration damping device 10 to the vehicle body 13.

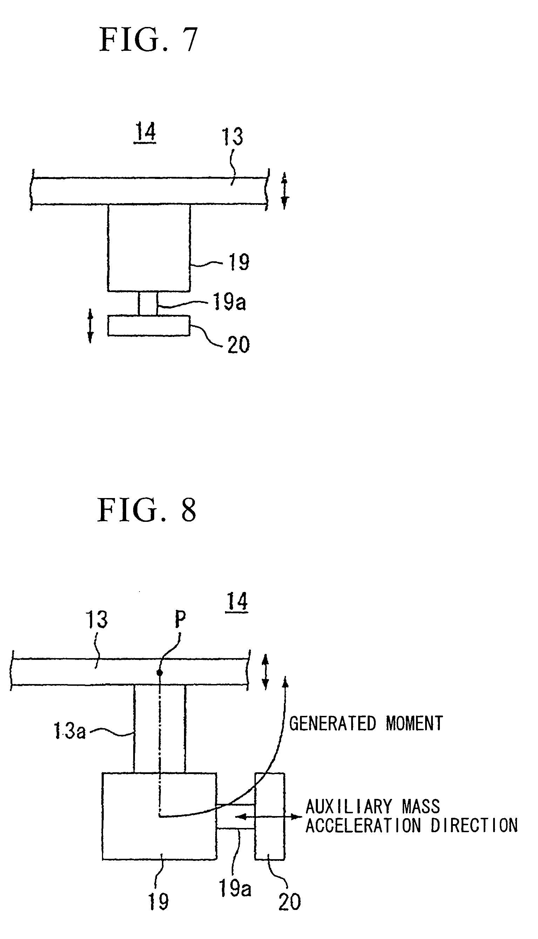

FIG. 7 shows an example of the vibrating means 14 used for the automobile vibration damping device of the present invention, in which the auxiliary mass 20 is attached at the distal end of the movable axis 19a of the reciprocating motor 19 that is fixed to the vehicle body 13. In the state in which the coil is not energized, the movable element of the reciprocating motor 19 is stationary at the neutral position of the motor by the magnetic force of permanent magnets, and moves in a reciprocal manner by supplying electricity. Moreover, the only moving portion of the reciprocating motor 19 is the iron core and the mechanical strength is high, and since there is no need to supply power to the movable portion, there is no possibility of disconnection and the like. The vibrating means 14 shown in FIG. 6 reduces vibration of the vehicle body 13 by causing the auxiliary mass 20 to vibrate in the same direction as the vibration direction of the vehicle body 13 in accordance with vertical (perpendicular) vibration of the vehicle body 13.

However, in the case of the automobile travelling on bad roads with large irregularities, the vehicle body 13 receives large vibrations in the perpendicular direction compared to the horizontal direction. When such a large vibration in the perpendicular direction is received, a phenomenon occurs in which the auxiliary mass 20 of the vibrating means 14 shown in FIG. 7 vibrates beyond the movable range. Accordingly, if the reciprocating motor 19 is removed by a predetermined distance in the perpendicular direction (the direction of receiving the large vibration) with respect to the vehicle body 13, and the vibration direction of the auxiliary mass 20 is made to vibrate in the horizontal direction (the direction perpendicular to the direction of receiving the large vibration), it is possible to prevent the occurrence of the phenomenon of the auxiliary mass 20 vibrating beyond the movable range even if a large vibration is received in the perpendicular direction. FIG. 8 is a drawing that shows the constitution of the vibrating means 14 that is used in the automobile vibration damping device. In the vibrating means 14 shown in FIG. 8, the reciprocating motor 19 is fixed to the vehicle body 13 separated by a predetermined distance in the direction of receiving the large vibration by a reciprocating motor holding portion 13a, and the vibrating direction of the auxiliary mass 20 is made to vibrate in the horizontal direction. If the reciprocating motor 19 fixed in this way is driven to vibrate the auxiliary mass 20 in the horizontal direction, torque is produced at fulcrum P (the position at which the reciprocating motor holding portion 13a is fixed to the vehicle body 13). If the reciprocating motor 19 is controlled so as to suppress the vertical vibration of the vehicle body 13 using this torque, along with being able to prevent the auxiliary mass 20 from vibrating beyond the movable range under the influence of the vertical vibration of the vehicle body 13, it becomes possible to control so as to suppress vibration of the vehicle body 13.

Note that the distance between the vehicle body 13 and the reciprocating motor 19 (the length of the reciprocating motor holding portion) may be determined in accordance with the vibration condition of the vehicle body and the performance of the reciprocating motor 19 in which the auxiliary mass 20 is attached.

Note that in the auxiliary mass 20 shown in FIG. 8, using the component parts of the automobile (radiator, battery) or accessories (spare tire, tools) that are supported by spring elements on the vehicle body, these components parts or accessories may be vibrated by the reciprocating motor 19. By doing so, since it is not necessary to newly equip the automobile with an auxiliary mass, it is possible to perform vibration damping without increasing the weight of the automobile.

In this way, since it is possible to impart vibrations to the vehicle body 13 using the torque that is generated by causing the auxiliary mass supported by the actuator (reciprocating motor 19) to vibrate in a direction perpendicular to the direction of vibration of the vehicle body 13 in this way, even if large vertical directions are received while the automobile travels over bad roads, without becoming a force in the driving direction of the actuator (vibrating direction of the auxiliary mass), it is possible to prevent the auxiliary mass that is fixed to the actuator from being vibrated beyond the movable range, and so it becomes possible to perform optimal vibration damping. Also, since a vibrating means that generates vibration separate from the vibration of the engine is provided, it is possible to reduce the vibration amplitude of the seat portion by the reaction force of the vibrating means. Also, by adjusting the vibration mode of the vehicle body so as to become a node in the vicinity of the seat portion, the vibration amplitude in the vicinity of the seat portion decreases, and therefore, it is possible to attain the object of improving riding comfort.

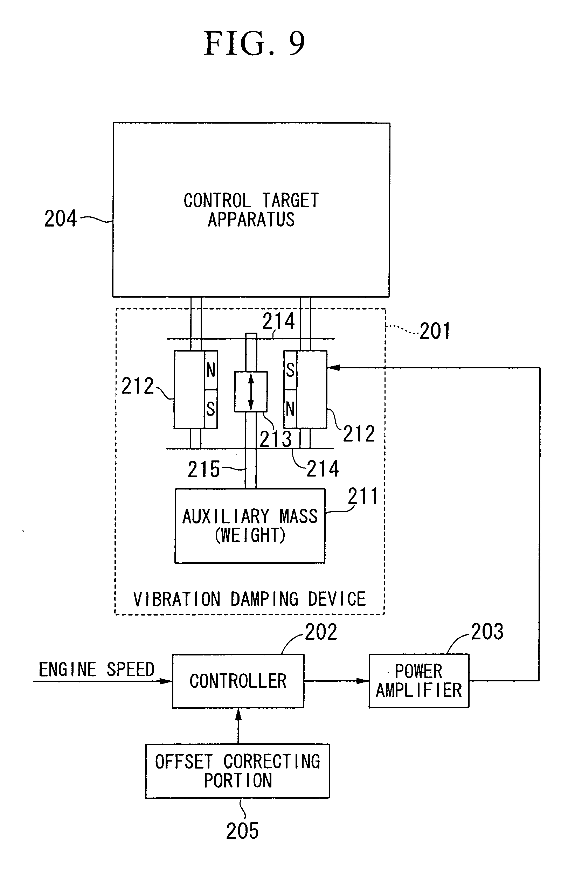

Next, the vibration damping device according to another embodiment of the present invention shall be described with reference to the drawings. FIG. 9 is a block drawing that shows the constitution of the same embodiment. In this drawing, the reference numeral 201 denotes a vibration damping device that is fixed to a control target apparatus 204 that is the object of the vibration damping control and that suppresses vibrations of the control target apparatus 204 by driving an auxiliary mass member with a linear actuator (for example, a reciprocating motor) that is provided therein. The control target apparatus 204 here is for example the vehicle body of an automobile.

Reference numeral 202 denotes a controller which controls the vibration damping device 201. Here, in order to reduce vibration of the vehicle body due to engine rotation of the automobile, by inputting the rotational frequency information of the engine mounted in the automobile that is the target of vibration damping, the vibration damping device 201 is controlled. Reference numeral 203 denotes a power amplifier that drives the vibration damping device 201. Reference numeral 211 denotes an auxiliary mass (weight) that is added to the control target apparatus 204. Reference numeral 212 denotes stators that constitute the linear actuator, and are fixed to the control target apparatus 204. Reference numeral 213 denotes a movable element that constitutes the linear actuator, and performs reciprocal movement in the gravity direction (up and down movement on the page of FIG. 9). The vibration damping device 201 is fixed to the control target apparatus 204 so that the direction of vibration to control the control target apparatus 204 agrees with the reciprocal movement direction (thrust direction) of the movable element 213. Reference numeral 214 denotes blade springs that support the movable element 213 and the auxiliary mass 211 so as to be capable of moving in the thrust direction. Reference numeral 215 denotes a shaft that joins the movable element 213 and the auxiliary mass 211, and is supported by the blade springs 214. Reference numeral 205 denotes an offset correcting portion for correcting discrepancies of the neutral position of the movable element 213 due to the self weight of the auxiliary mass 211, and outputs a direct-current value corresponding to the offset amount calculated from the weight of the auxiliary mass and the spring constant of the blade springs. The controller 202 adds a direct-current component based on the direct-current value outputted from the offset correcting portion 205 to a control signal to be output to a power amplifier 203, and outputs the control signal to which has been added the direct-current component corresponding to the offset amount to the power amplifier 203. The power amplifier 203, based on the control signal output from the controller 202 to which has been added the direct-current component, controls the current to be output to the linear actuator and controls the reciprocal motion of the movable element 213.

Next, the operation of the vibration damping device 201 shown in FIG. 9 shall be described. When alternating current (sine wave current, rectangle wave current) is sent through the coil (not shown) that constitutes the linear actuator, in the state in which current of a predetermined direction flows into the coil, magnetic flux is induced in a permanent magnet from the S pole to the N pole, and a magnet flux loop is formed. As a result, the movable element 213 moves in a direction opposed to gravity (up direction). On the other hand, when current in the opposite direction to the predetermined direction is flowed to the coil, the movable element 213 moves in the gravity direction (down direction). By repeating the above operation with the direction of the flow of current to the coil alternately changing, the movable element 213 moves in a reciprocal manner in the axial direction of the shaft 215 with respect to the stators 212. Thereby, the auxiliary mass 211 joined to the shaft 215 vibrates in the vertical direction. By controlling the acceleration of the auxiliary mass 211 based on the control signal outputted from the controller 2, it is possible to adjust the controlling force so as to offset the vibration of the control target, and thus possible to reduce the vibration of the control target apparatus 204.

In the linear actuator shown in FIG. 9, the blade springs 214 do not support the movable element in a manner enabling reciprocal movement by causing it to slide, but hold the movable element 213 at two locations on the upper end side and lower end side of the shaft 215, and by undergoing elastic deformation support the movable element 213 in a manner enabling reciprocal movement in the axial direction of the shaft 215. Thereby, since abrasion and sliding resistance do not occur at the movable element 213, even after being used over a long period, high reliability is obtained without a reduction in accuracy of the shaft support, and it is possible to achieve an improvement in performance without a power consumption loss caused by sliding resistance.

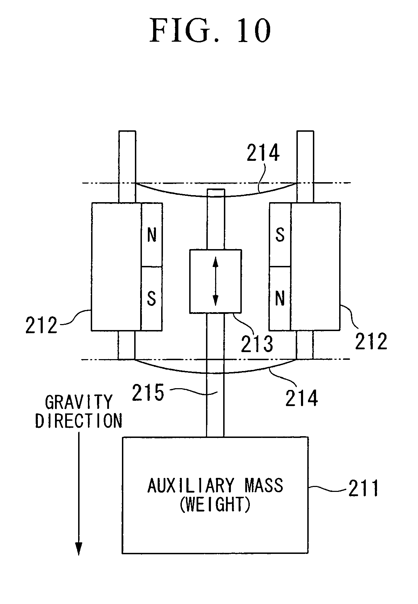

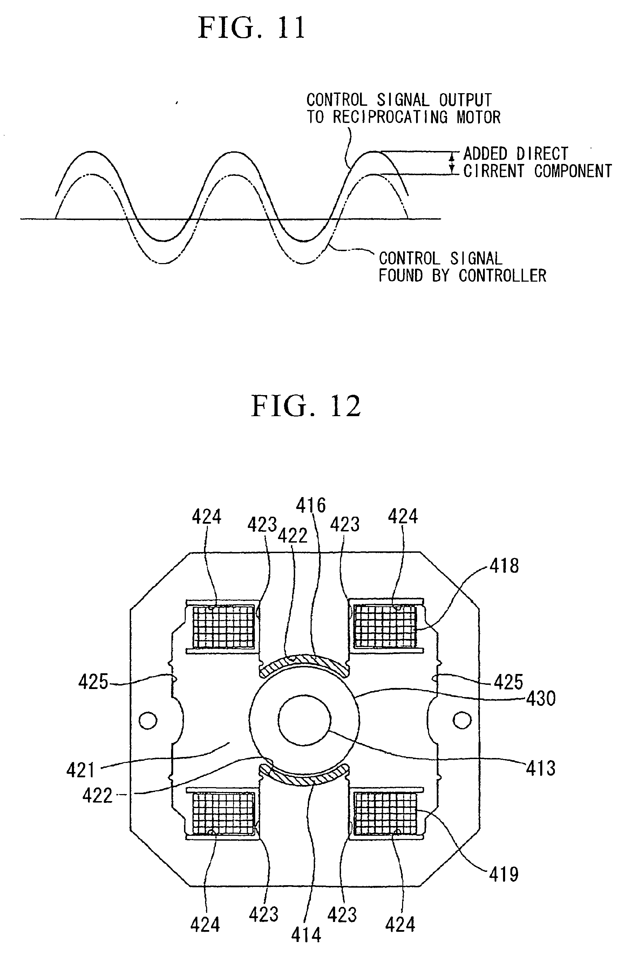

Next, the operation of the offset correcting portion 205 correcting the shift in origin of the movable element 213 shall be described referring to FIG. 10 and FIG. 11. Since the controlling force that the vibration damping device 201 generates is determined by the weight (mass) of the auxiliary mass and the acceleration when causing the auxiliary mass to vibrate, in order to reduce the vibration of the vehicle body of an automobile and the like, it is necessary to determine the weight of the auxiliary mass based on the required controlling force. Since the weight of the auxiliary mass 211 cannot be determined based on the spring constant of the blade springs 214, when the direction of vibration damping is in agreement with the gravity direction, as shown in FIG. 10, due to the self weight of the auxiliary mass 211, the bowed state of the blade springs 214 becomes the neutral position of the movable element 213. In such a state, when the same control signal as in the case when the movable element 213 reciprocates horizontally is given to the linear actuator, the above-mentioned problem arises. Accordingly, the offset correcting portion 205 is constituted so as to output a direct-current value corresponding to the flexure amount (offset amount) of the blade springs 214 calculated from the spring constant of the blade springs 214 and the weight of the auxiliary mass 211. The direct-current value that this offset correcting portion 205 outputs is a direct-current value that is found in advance in accordance with the flexure amount (offset amount) of the blade springs 214 that is found from the spring constant of the blade springs 214 and the weight of the auxiliary mass 211, and is set in the offset correcting portion 205.

As shown in FIG. 11, the controller 202 adds a direct-current component based on the direct-current value outputted from the offset correcting portion 5 to the control signal calculated from the input engine speed, and outputs it to the power amplifier 203. Thereby, the control signal to which has been added a direct-current component equivalent to the offset amount is outputted to the power amplifier 203. The power amplifier 203 controls the reciprocal movement of the movable element 213 by controlling the current that is output to the linear actuator based on the control signal to which has been added the direct-current component outputted from the controller 2. By this operation, it is possible to correct to the offset due to the self weight of the auxiliary mass 211.

Note that in the offset correcting portion 205, an input means that inputs a direct-current value in accordance with the offset amount may be provided, and a direct-current value that is input by this input means may be added to the control signal. By doing so in this manner, even if the weight of the auxiliary mass 211 is changed, it is possible to easily change the direct-current component amount to be added.

Thus, the offset correction leads to driving (controlling force generation) within the regular stroke range of the vibration damping device 201, and since the required controlling force can be outputted without controllability being impaired, good vibration damping performance can be obtained. Also, as a result of operation within the regular stroke range of the vibration damping device 201, it is possible to achieve operation of the blade springs 214 within the allowable vibration amplitude range, and it is possible to drive without placing excessive stress on the blade springs 214. For this reason, it is possible to extend the service life of the blade springs 214, and possible to improve the reliability of the vibration damping device as a whole. In particular, in the case of mounting on an automobile, reliability is very important. Also, since driving is in the linear region of the blade springs 214, controllability (linearity) is excellent, it is possible to obtain good vibration damping performance, and it is possible to prevent unstable operation of a vibration damping device.

Also, due to the offset correction by the direct-current addition, there is no need to use an outer spring, and it is possible to achieve a reduction in size (flattening) of the device without the movable element becoming longer in the stroke direction (height). In particular, in the case of mounting in an automobile, a smaller size/flattening is important in terms of mounting space. Also, since there is no need to provide an outer spring, spring holding component and the like, it is possible to reduce the cost. Also, since the characteristic frequency of the entire vibration damping device is not influenced when the current has a direct-current component added, the controllability and vibration damping effect are not impaired. Also, since it is possible to make it operate within the range of positive current by adjusting the magnitude of the direct current, a single-sided power supply is possible, and so it is possible to achieve a cost reduction in the power supply and power amplifier.

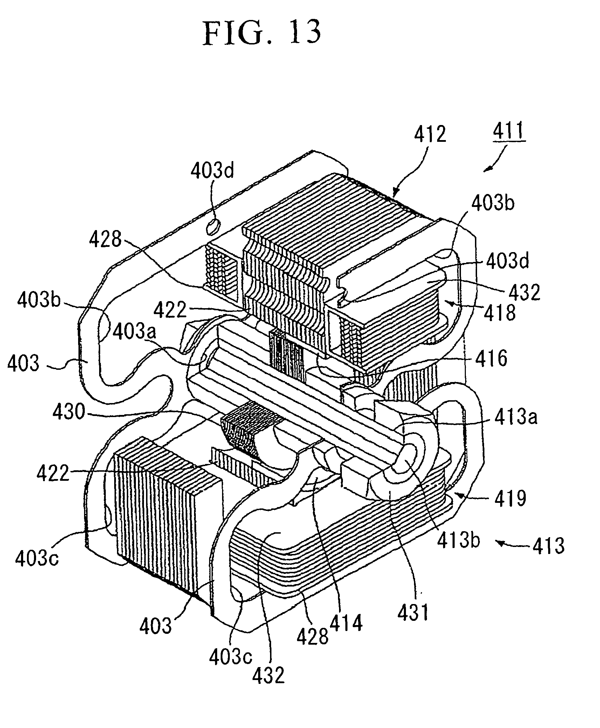

Next, another embodiment of the present invention shall be described with reference to the drawings. FIGS. 12 to 14 are drawings of the linear actuator that use the vibration damping device according to this embodiment. A linear actuator 411 of this embodiment is provided with a yoke (stator) 412, a movable element 413 that is provided in a manner capable of reciprocal motion inside this yoke 412, a first permanent magnet 414 that is fixed to the yoke 412, a second permanent magnet 416 that is fixed to the yoke 412, and two coils 418, 419 that are fixed to the yoke 412, and as shown in FIG. 13 two blade springs 403 are provided that support the movable element 413 in a manner capable of reciprocal movement with respect to the yoke 412 by undergoing elastic deformation and position the movable element in a non-driven state in a reference position in the reciprocal movement direction. Note that the number of blade springs 403 need not necessarily be two, and one or three or more is also allowable.

As shown in FIG. 12, since a through-hole 421 is formed in the central position of the yoke 412, it has on overall square tubular shape. The through-hole 421 has cylindrical surface portions 422 at two locations that face each other in a state of being mutually spaced apart, forming a shape of the inner circumferential surface of a cylinder being cut in parallel with the axis line at two places with a predetermined interval. The two cylindrical surface portions 422 have the same diameter, same length and same width, and are disposed coaxially.

Since the through-hole 421 is formed in the central position of the yoke 412, it has on overall square tubular shape. The through-hole 421 has cylindrical surface portions 422 at two locations that face each other in a state of being mutually spaced apart, forming a shape of the inner circumferential surface of a cylinder being cut in parallel with the axis line at two places with a predetermined interval, plane portions 423 that extend on the outer side along the directions that connect the cylindrical surface portions 422 from both end edge portions of the respective cylindrical surface portions 422, plane portions 424 that extend to the outside perpendicular to the plane portions 423 from the end edge portions of the plane portions 423 on the opposite side with respect to the cylindrical surface portions 422, and plane-shaped inner surface portions 425 that extend in the direction connecting the cylindrical surface portions 422 to respectively couple the corresponding plane portions 424. Here, the cylindrical surface portions 422 of two locations have the same diameter, same length and same width, and are disposed coaxially.

Note that this yoke 412 consists of stacked steel plates, each consisting of a base material that is formed by being punched out of a laminar steel plate with a press, that are stacked and joined while aligning their position in the through-hole direction of the through-hole 421. As shown in FIG. 13, the movable element 413 has a cylindrical shape on which an external thread portion 413a is formed at the distal end, and is provided with a shaft 413b that moves in a reciprocal manner in the axial direction and an iron member 430 that is inserted and fitted on the inner side of the shaft 413b and serves as a movable magnetic pole that is fixed at a midway position in the axial direction of the shaft 413b.

Permanent magnets 414 and 416 consist of for example a ferrite magnet, and as shown in FIG. 13, are joined and fixed at the cylindrical surface portions 422. Moreover, for the permanent magnet 414, the N pole is arranged at the outer diameter side, and the S pole is arranged at the inside diameter side, and for the permanent magnet 416, the S pole is arranged at the outer diameter side, and the N pole is arranged at the inside diameter side. Moreover, a magnetomotive force is unsymmetrically formed by a constitution in which the permanent magnets 414 and 416 are closer to one end side of the axial direction position of the reciprocal movement range of the iron member 430 and disposed at the inner surface of the cylindrical surface portions 422 to project in the direction of the iron member 430 and are not disposed at the other end side.

As shown in FIG. 13, the coil 418 is constituted by a winding drum 432 that is attached to the yoke 412 so as to project to the inside and surround the cylindrical surface portion 422, with a conducting wire being wound in many layers on this winding drum 432. The coil 419 is constituted by a winding drum 432 being similarly attached at the cylindrical surface portion 422 formed at a position opposing the cylindrical surface portion 422 and corresponding to the above-mentioned cylindrical surface portion 422 across the yoke 412, with a conducting wire being wound in many layers on this winding drum 432.

Two blade springs 403 are arranged separated in the axial direction of the movable element 413, with the yoke 412 therebetween. The two blade springs 403 have the same shape, are machined by being punched from a metal plate of uniform thickness, and are formed in the figure-eight shape when viewed from the axial direction of the movable element 413. At the location corresponding to the portion where the lines at the center of the figure-eight shape intersect, a through-hole 403a that supports the distal end or back end of the movable element 413 is formed. Also, at the locations corresponding to the inside of the two spaces that are surrounded by the figure-eight shape, through-holes 403b, 403c are respectively formed with a size capable of sufficiently passing the above-mentioned coil 418 or 419 to the inside. Moreover, at the locations corresponding to the topmost portion and bottommost portion of the figure-eight shape, small holes 403d are respectively formed for fixing the blade springs 403 to the yoke 412.

The blade springs 403 support the movable element 413 at a midway position in the axial direction of the coil 418. In detail, as shown in FIG. 13, one blade spring 403 that supports the distal end of the movable element 413 is fixed passing the distal end of the movable element 413 at the through-hole 403a, and fixed to the yoke 412 at positions farther than the coil 418 or 419 from the center of the movable element 413 by a screw not illustrated that is passed through the small hole 403d and a screw not illustrated that is passed through a small hole 403e. Also, the other blade spring 403 that supports the rear end of the movable element 413 is fixed passing the rear end side of the movable element 413, and fixed to the yoke 412 at positions farther than the coil 418 or 419 from the center of the movable element 413 by screws not illustrated that are passed through the small holes 403d and 403e.

In the one blade spring 403, the coil 418 is made to project from the through-hole 403b to the distal end side of the movable element 413, and the coil 419 is made to project from the through-hole 403c to the distal end side of the movable element 413, and in the other blade spring 403, the coil 418 is made to project from the through-hole 403b to the rear end side of the movable element 413, and the coil 419 is similarly made to project from the through-hole 403c to the rear end side of the movable element 413. The interval of the two blade springs 403 along the axial direction of the movable element 413 is narrower than the dimension of the coil 418 or 419 along the same direction, and the through-holes 403b, 403c play the role of an "escape" for avoiding interference with the coil 419.

The blade springs 403 hold the movable element 413 at two locations on the front end side and rear end side of the movable element 413, rather than supporting the movable element 413 in a manner enabling reciprocal movement by causing it to slide, and the blade springs 403 support the movable element 413 in a manner enabling reciprocal movement in the axial direction by undergoing elastic deformation themselves. Note that in order to ensure that the deformation amount of the blade springs 403 when the moveable element 413 is moving back and forth does not exceed the deformation amount in which there is a possibility of fatigue and in the end breakage due to being forced to undergo repeated elastic deformation, adjustments are made in advance such as making the distance from the through-hole 403a that supports the movable element 413 to the small hole 403d or 403e (length of the blade spring itself rather than the linear length) as long as possible, and making the plate thickness thin. However, the outer shape thereof is of a size that does not protrude from the outer shape of the yoke 412 when viewing the entire linear actuator from the axial direction of the movable element 413.

According to the actuator 411 shown in FIG. 13, by sending current through the coil 418, the magnetic flux from the permanent magnet 416 to the permanent magnet 414 located at one end side of the actuator 411 becomes dense, and as a result thrust is produced in the direction of the one end side. Also, it is possible to generate thrust in the movable element 413 even in the case of zero displacement of the movable element 413 in the axial direction by bringing the permanent magnets 414 and 416 to the one end side with respect to the yoke 412.

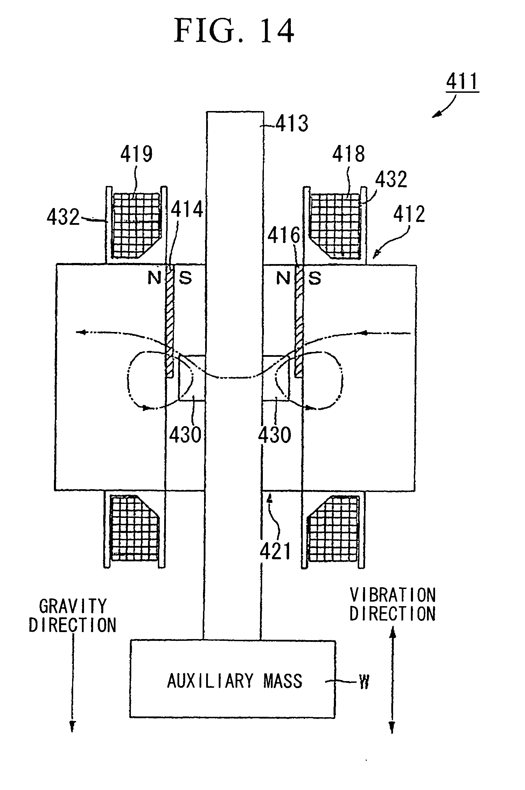

Next, the operation of correcting shift of origin shall be described with reference to FIG. 14. FIG. 14 is a drawing that shows the auxiliary mass W for generating a controlling force for damping vibrations joined at one end of the movable element 413 of the linear actuator 411 shown in FIG. 13 and the state of the linear actuator 411 being fixed to a vehicle body of an automobile or the like so that the stroke direction of the movable element 413 becomes the gravity direction. Here, the explanation assumes that the direction of vibration to be reduced agrees with the gravity direction. Since the controlling force generated by the linear actuator 411 equipped with the auxiliary mass W is determined by the weight (mass) of the auxiliary mass W and the acceleration when causing the auxiliary mass to vibrate, in order to reduce the vibration of the vehicle body of an automobile and the like, it is necessary to determine the weight of the auxiliary mass W based on the required controlling force. Accordingly, since it is not possible to determine the weight of the auxiliary mass W based on the spring constant of the blade springs 403, when the direction of vibration damping is in agreement with the gravity direction, due to the self weight of the auxiliary mass W, the bowed state of the blade springs 403 becomes the neutral position of the movable element 413. In such a state, when the same control signal as in the case when the movable element 413 reciprocates horizontally is given to the linear actuator 411, the above-mentioned problem occurs.

As shown in FIG. 14, in the linear actuator 411 of the present invention, since the permanent magnets 414, 416 are provided only above the stroke direction of the movable element 413, a force that pulls up the iron member 430 fixed to the movable element 413 occurs, and the iron member 430 can be held in a neutral position (point of origin) by balancing with the gravity of the auxiliary mass W. In order to hold the iron member 430 in a neutral position, the force of the permanent magnets 414, 416 raising the iron member 430 upward is calculated based on the spring constant of the blade springs 403 that support the movable element 413 and the weight of the movable element 413 to which is joined the auxiliary mass W, and permanent magnets that are capable of generating this calculated force should be provided in the linear actuator 411. At this time, when it is difficult to accurately maintain the neutral position of the iron member 430 solely by adjustment of the force of the permanent magnets 414 and 416 raising the iron member 430, it is acceptable to perform fine adjustment by adjusting the spring constant of the blade springs 403. In order to cause an increase in the thrust of the movable element 413, fresh problems such as having to increase the linear actuator 411 main body occurs.

As shown in FIG. 14, since the permanent magnets 414 and 416 are provided only above the stroke direction of the movable element 413, by utilizing the unbalance of the magnetomotive force by the permanent magnets to counteract the shift in the neutral position by the self weight of the auxiliary mass W, it is possible to correct the offset.

Note that to generate the unbalance of the magnetomotive force, in addition to the constitution shown in FIG. 14, it is also acceptable to provide the permanent magnets both above and below the stroke direction, and change the thickness of the upper and lower permanent magnets to generate an unbalance. Also, it is possible to change the substance of the upper and lower permanent magnets. Furthermore, it is possible to generate unbalance by varying the respective gaps between the upper and lower permanent magnets and the iron member 430.

In this way, since the offset correction leads to driving (controlling force generation) within the regular stroke range of the vibration damping device, the required controlling force can be outputted without controllability being impaired, and so good vibration damping performance can be obtained. Also, as a result of operation within the regular stroke range of the vibration damping device, it is possible to achieve operation of the blade springs 403 within the allowable vibration amplitude range, and it is possible to drive without placing excessive stress on the blade springs 403. For this reason, it is possible to extend the service life of the blade springs 403, and possible to improve the reliability of the vibration damping device as a whole. In particular, in the case of mounting on an automobile, reliability is very important. Also, since driving is in the linear region of the blade springs 403, controllability (linearity) is excellent, it is possible to obtain good vibration damping performance, and it is possible to prevent unstable operation of a vibration damping device.

Also, by providing the permanent magnets only upward and utilizing the unbalance of the magnetomotive force by the permanent magnets to counteract the shift in the neutral position by the self weight of the auxiliary mass W, it is possible to simplify the content of the control process of the linear actuator 411, and possible to reduce the power consumption of the vibrating damping device. Moreover, since the number and size of the permanent magnets can be reduced, the magnetic spring becomes small, and the spring constant of the entire vibration damping device falls, whereby it becomes possible to lower the characteristic frequency of vibration. For this reason, since the characteristic frequency of vibration of the vibration damping target (vehicle body) and the vibration damping device separate, the resonance magnification decreases, and since control occurs where the phase change of the movable amplitude with respect to the control instruction is small, control becomes easy. Also, since the usage amount of expensive permanent magnets is low, there is a reduction in cost. Also, since an external spring or the like is not used, it is possible to achieve a reduction in size and flattening of the vibration damping device without a lengthening of the stroke direction (height). Moreover, since additional components such as an external spring and spring holding parts and the like are unnecessary, it is possible to perform offset correction without an increase in cost.

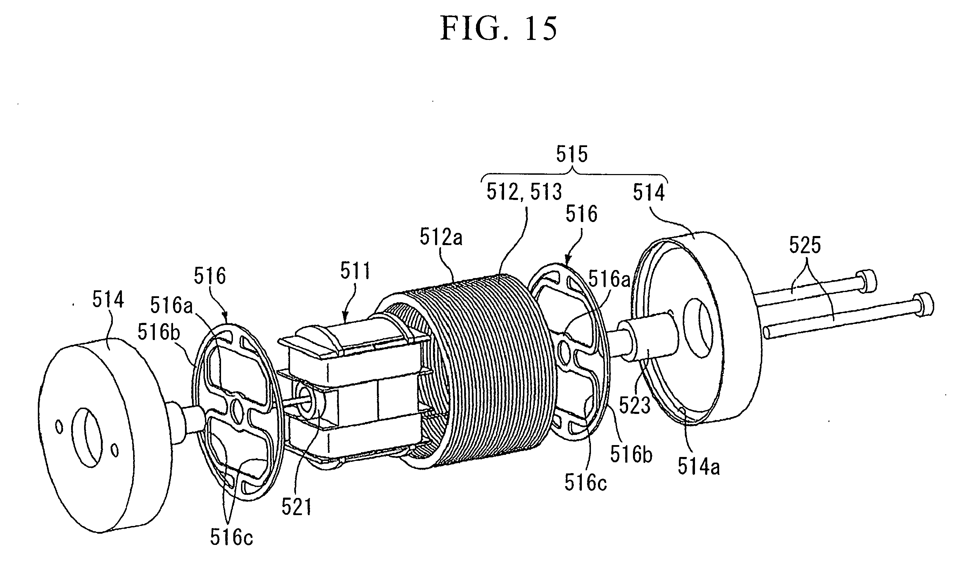

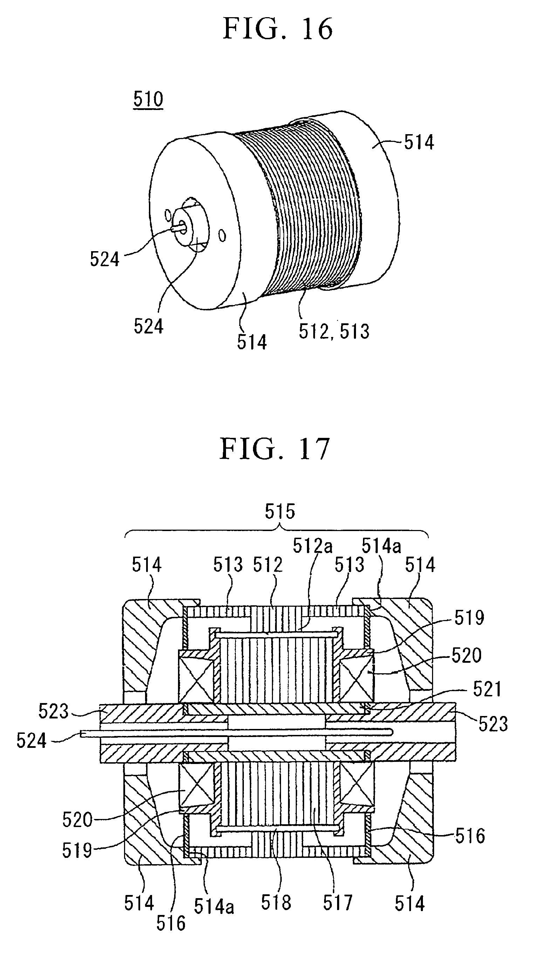

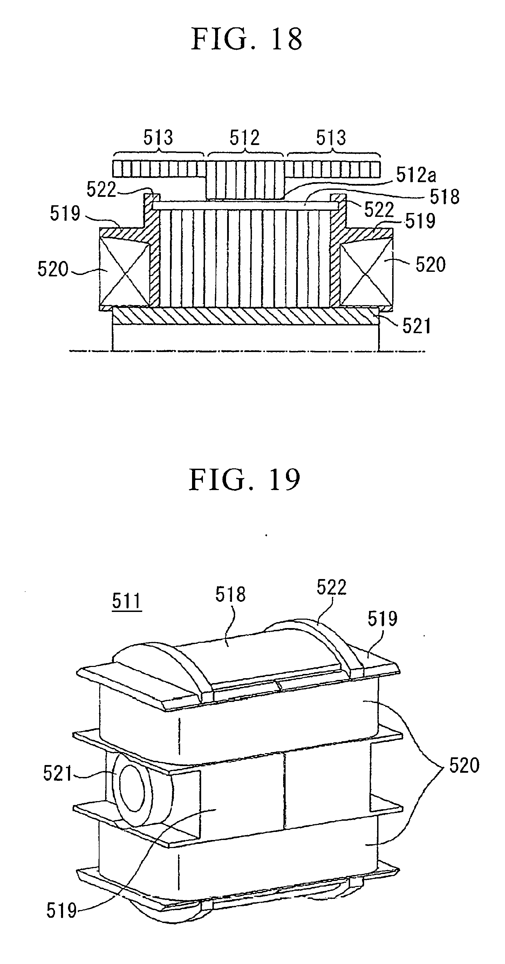

Next, still another embodiment of the present embodiment shall be described hereinbelow with reference to the drawings. The embodiment relates to a blade spring that is provided in a linear actuator. FIG. 15 is an exploded perspective view that shows one example of an outer movable linear actuator to which the blade spring according to the present invention is attached, FIG. 16 is an overall perspective view of the outer movable linear actuator, FIG. 17 is a cross-sectional view of the outer movable linear actuator, and FIG. 18 is an enlarged cross-sectional view of the essential portions of the outer movable linear actuator. Here, an outer movable linear actuator 510 is provided with a stator 511 and a movable element 515 that is disposed around the stator 511 and has an outer core 512, a spacer 513, and a cover 514, and blade springs 516 that elastically support this stator 511 and the movable element 515 to be coaxial and concentric and in a manner capable of reciprocal movement.

The movable element 515 is constituted by the outer core 512, the spacer 513, and the cover 514. The outer core 512 has on overall cylindrical shape, and consists of steel plates laminated and bonded in the thrust direction. The inner circumferential surface of a portion 512a of the outer core 512 that faces the permanent magnets that are fixed on the outer circumference of the stator 511 has a predetermined gap and has a small inner diameter so that magnetic flux easily passes through. The inner diameter of a portion 512b that does not face the permanent magnets has a large diameter in order to reduce leakage of magnetic flux. Also, the portion 512a that faces the permanent magnets and the portion 512b that does not face the permanent magnets are oppositely arranged in a point symmetric manner with respect to the cylindrical center.

A plurality of steel plates that are laminated in the thrust direction are used for the spacer 513 of the movable element 515. Also, the inside diameter is formed to be larger than the gap surface inner diameter of the outer core 512, in order to reduce the leakage of magnetic flux. Furthermore, the spacer 513 is installed at both ends of the outer core 512 in the axial direction, and serves as the reference of the attachment position of the blade springs 516 in the thrust direction.

The outer core 512 and the spacer 513 are constituted by being integrated in a nearly cylindrical shape by caulking and the like.

The cover 514 wedges and fixes the outer core 512, the spacer 513, and the blade spring 516 from both ends in the thrust direction. The cover 514 fixes the spacer 513 and an outer circle 516b of the blade spring 516 with a step portion 514a as shown in FIGS. 16 and 17, and holds the stator 511 and the movable element 515 in a coaxial and concentric state. Also, the covers 514 play the role of a mass (weight) of the movable element 515.

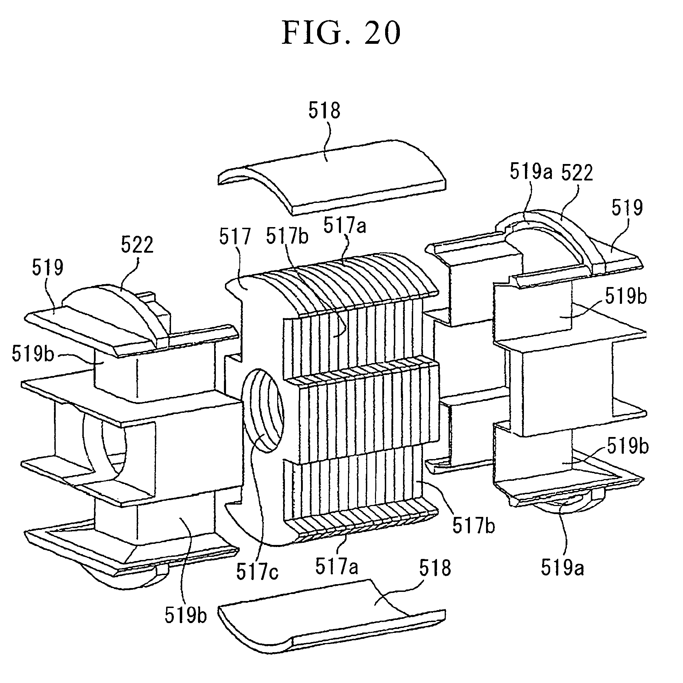

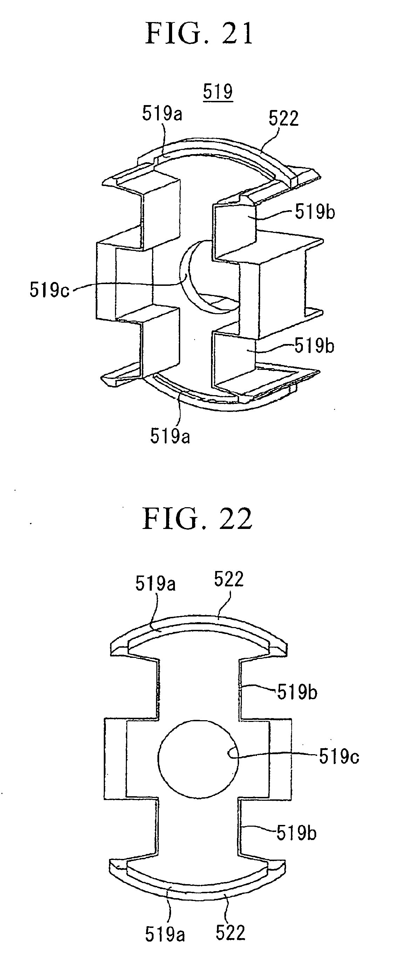

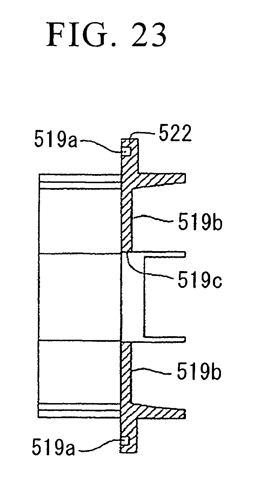

FIG. 19 is an overall perspective view of the stator, FIG. 20 is an exploded perspective view of the stator, FIG. 21 is a perspective view that shows the insulator, FIG. 22 is a rear view that shows the insulator, and FIG. 23 is a longitudinal sectional view that shows the insulator. The stator 511 is constituted from an insulator 519 that fixes and holds a permanent magnet 518 and a permanent magnet 518 that are installed on the outer side of an inner core 517 and that encircles the inner core 517, a coil 520 that is wound on the outer circumference of the insulator, and a shaft 521 that is installed by being passed through the center portion.

The inner coil 517 is constituted from laminated steel plates that are laminated in the thrust (reciprocal movement) direction. Also, an outer periphery portion 517a that passes the magnetic flux to an outer core as shown in FIG. 20 and the like is round, and it has a concave portion 517b for winding a coil and a through-hole 517c for shaft attachment. Furthermore, the permanent magnets 518 are installed on the outer periphery portions 517a. The outer periphery portions 517a are arranged to be point symmetric with respect to the axial core of the shaft 521 (through-hole 517c).

The permanent magnet 518 is an integral type that is magnetized in the radial direction to produce a surface N-S pair in the direction of thrust, and is formed to be longer than the lamination thickness of the inner core 517. Also, the permanent magnet 518 is curved in the same curvature as the outer periphery portion 517a of the inner core 517. Note that magnetization of the portions protruding further than the inner core 517 is not required.

The insulator (bobbin) 519 is divided into two in the thrust direction, and wedges the inner core 517 and the permanent magnets 518 in the direction of thrust. Also, the insulator 519 has a concave groove 519a that curves in order to insert the portions of the permanent magnet 518 that protrude beyond the inner core 517. Also, this concave groove 519a is a fixing mechanism for the permanent magnet 518. By inserting the end portions of the permanent magnet 518 into this recessed groove 519a, shifting of the permanent magnet in the radial direction and thrust direction can be regulated. For this reason, a formed flange portion 522 of the concave groove 519a of the insulator 519 is formed to be larger than the outer diameter of the stator 511 in which the permanent magnets disposed. Furthermore, the insulator 519 has concave portions 519b for winding the coil 520 above and below a center hole 519c through which the shaft 521 is inserted.

The coil 520 is wound on the outer circumference of the insulator 519 that is formed from a synthetic resin and the like. It is for insulating with the inner core 517. The coils 520 are connected so that current flows in the same direction in the upper portion and lower portion, and can make the movable element move in a reciprocal manner by switching the flow direction of the current.

The shaft 521 has a cylindrical shape as shown in FIGS. 17 to 19, and it passes through and attaches the central portion of the inner core 517 and the insulator 519 in the direction of thrust. Furthermore, both end portions of the shaft 521 are used as a reference of the attachment positions of the blade springs 516 in the direction of thrust. That is, the blade springs 516 are used as a bearing that supports the stator 511 and the movable element 515 in a coaxial and concentric state. Each blade spring 516 is supported from both sides buy a spring press 523 and the end portion of the shaft 521 as is evident from FIG. 15, and is constituted from an inner circle (inner annular portion) 516a that is fixed to the side of the stator 511, an outer circle (outer annular portion) 516b that is supported from both sides by the step portion 514a of the cover 514 and the end portion of the spacer 513, and arm portions 516c that couple the inner circle 516a and the outer circle 516b and elastically deform the enable reciprocal movement of the movable element 515. The hollow portion of the shaft 521 and the spring press 523 are utilized for the drawing out of a lead wire 524.

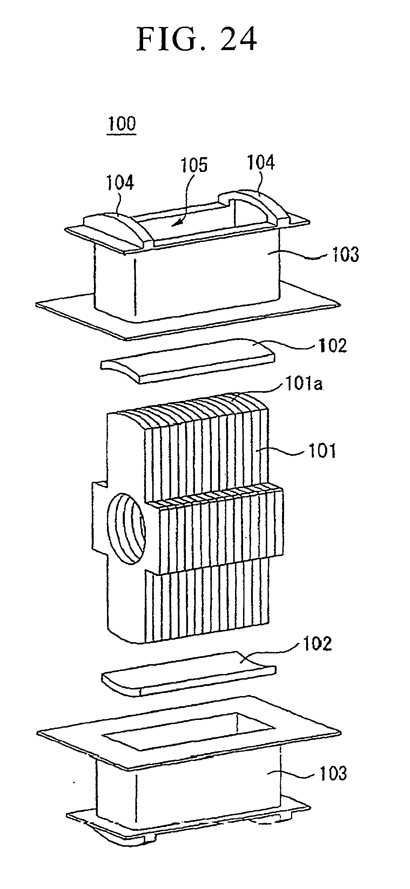

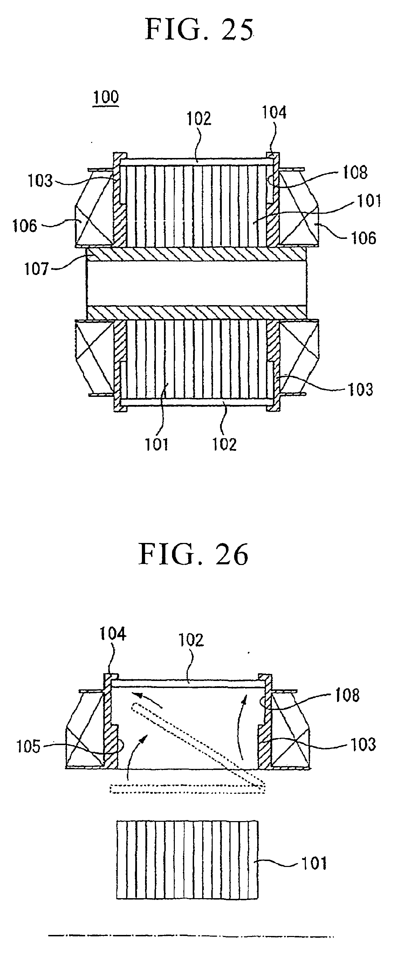

FIG. 24 is an exploded perspective view showing the second embodiment of the stator. FIG. 25 is a longitudinal cross-sectional view of the same stator, and FIG. 26 is an explanatory view that shows the procedure of attaching the permanent magnets in the second embodiment. In the present embodiment, the stator 100 is constituted from a bobbin 103 formed from an insulating material that fixes and holds the permanent magnet 102 and the permanent magnet 102 that are installed on the outer side of an inner core 101 and that is mounted on the inner core 101, a coil 106 that is wound around the bobbin 103, and a shaft 107 that is passed through the center portion and the like. In the inner core 101, steel plates with short arms and long arms formed in a cross shape are laminated in the thrust direction, and an outer periphery portion 101a of the long arm that passes magnetic flux to the outer core has a round shape. The bobbin 103 has a mounting hole 105 that is capable of being mounted on the long arm of the inner core 101, and flange portions 104 that are formed almost identically to the curvature of the permanent magnet 102 are formed. Moreover, in the bobbin 103, a magnet mounting hole 108 with a width that is wider than the mounting hole 105 is formed in the vicinity of the flange portions 104.

The stator 100 that is constituted in this way is assembled as shown in FIG. 26. First, after inserting one end of the permanent magnet 102 that has nearly the same length in the direction of thrust as the magnet mounting hole 108 of the bobbin 103 at an angle, the other end is inserted. Next, the inner core 101 is mounted and pressed from below. The permanent magnet 102 is fixed and held by the magnet mounting hole 108 and the inner core 101. Note that in the upper and lower bobbins 103, the bobbin and inner core are fixed by a widely known fixing means.

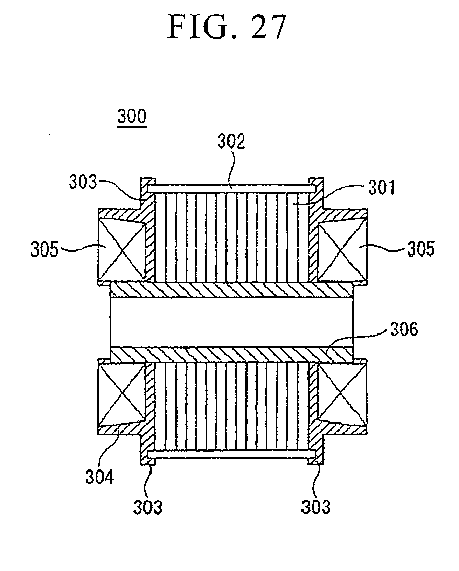

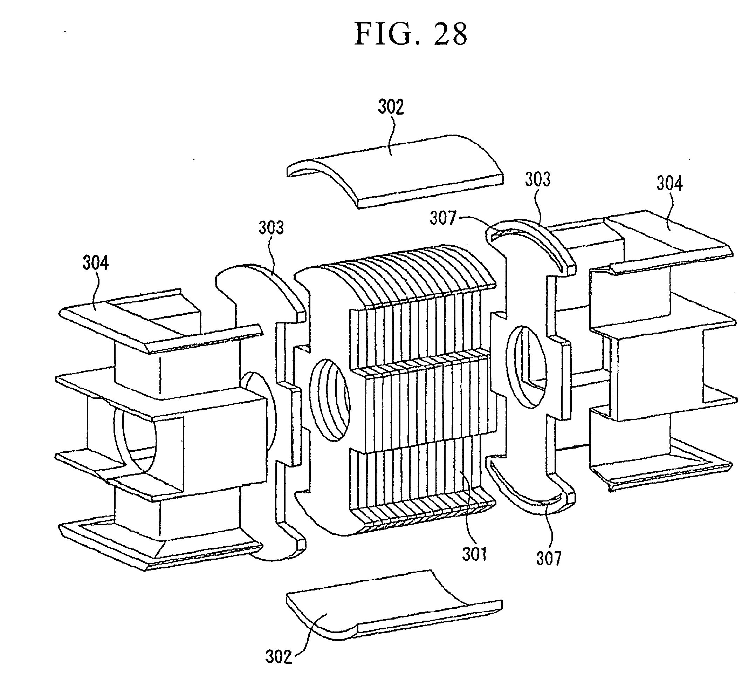

FIG. 27 is a longitudinal cross-sectional view that shows a third embodiment of the stator, and FIG. 28 is an exploded perspective view of the same stator. A stator 300 is constituted by end plates 303 that fix and hold a permanent magnet 302 and a permanent magnet 302 that are installed on the outer side of an inner core 301 and that are installed at both ends of the inner core 301 in the thrust direction, an insulator 304 that encircles the inner core, a coil 305 that is wound around the outer circumference of the insulator, and a shaft 306 that is installed passing through the center portion.

The end plates 303 are formed with nearly the same shape as the inner core 301, with a long hole 307 that fixes the end portions of the permanent magnet 302 being formed lengthwise in the radial direction. The long hole 307 has a shape that the end portions of the curved permanent magnets 302 are capable of fitting. Also, the end plates 303 are constituted by a nonmagnetic body for reducing the flux leakage. Note that the end plates 303 may also consist of a magnetic body.

The stator 300 that is constituted in this way fixes and holds the permanent magnets 302 with the long hole 307 that is formed in the end plates 303 that are provided at both ends of the inner core 301 and surrounds it with the insulator 304. Furthermore, the coil 305 is wound around the top of the insulator 304.

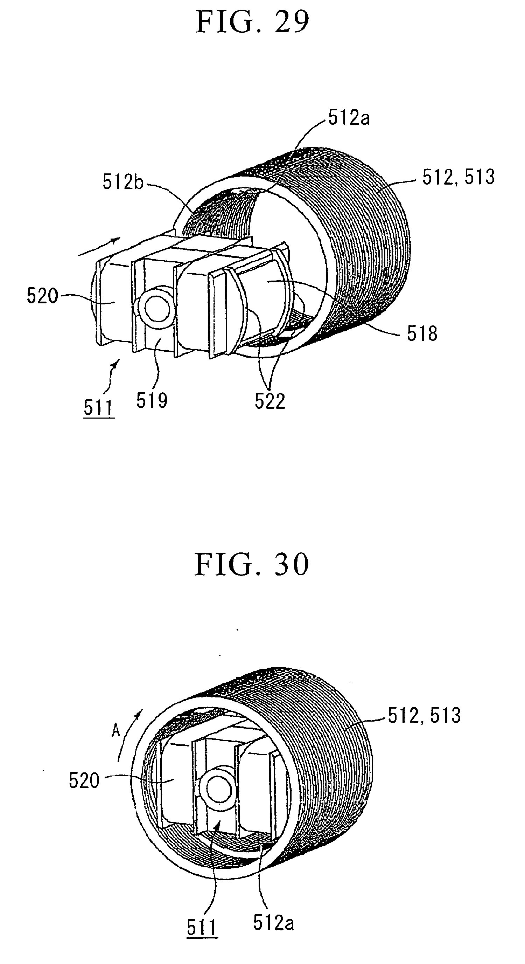

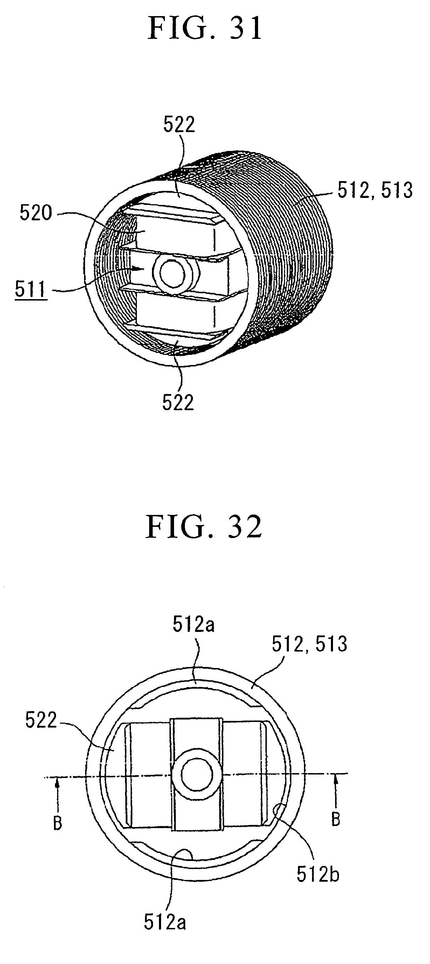

The components constituted in the above manner are assembled as given below. First, the stator 511 that is integrated is inserted in the joined body of the outer core 512 and the spacer 513. When doing so, since the inner diameter of a gap surface 512a of the outer core 512 is less than the inner diameter of the flange portion 522 of the stator 511, it cannot be inserted. Therefore, as shown in FIG. 29 and FIG. 32, after rotating it 90 degrees about the thrust direction (center axis) to make the permanent magnet 518 portions of the stator 511 match the portions 512b of the outer core 512 that does not face the permanent magnets, it is inserted.

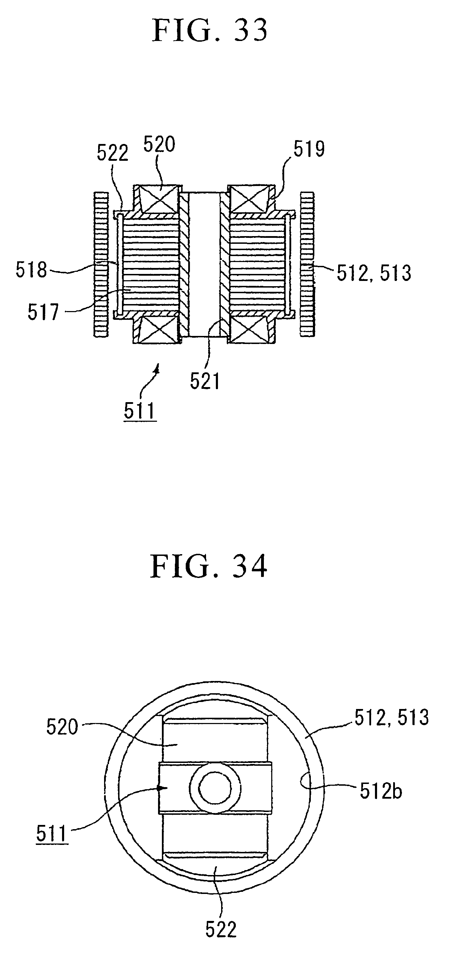

Next, after adjusting the position in the thrust direction, it is rotated 90 degrees in the direction of arrow A as shown in FIGS. 30, 31, 34. At this time, the portion 512a of the outer core 512 that does not faces the permanent magnets is positioned between the flange portions 522, 522 of the insulator 519 together with facing to the permanent magnets 518 as shown in FIGS. 17, 18, 34.

Next, the blade springs 516 are attached to the sides of the stator using the spring press 523, and lastly the outer core 512 and the spacer 513 that are integrated and the blade spring 516 are assembled by wedging in the thrust direction with the cover 514. At this time, a state in which the stator 511 and the movable element 515 are coaxial and concentric is obtained. Furthermore, the covers 514 at both ends are fixed by bolts 525.

Also, since the outer diameter of the flange portion 522 of the insulator 519 is greater than the inner diameter of the portions 512a of the outer core that face the permanent magnets, movement amount of the movable element 515 in the direction of thrust is physically restricted, and there is a stopper function. Accordingly, it is possible to obtain an effect of preventing the movable element 515 from falling out.

Also, as is evident form FIG.18, because the outer circle 516b of the blade spring 516 is fixed over the enter circumference in the circumferential direction by being sandwiched between the spacer 513 and the cover 514, it is possible to enlarge the retaining area, and it is possible to make the pressure distribution due to the fixation uniform in the circumferential direction. For that reason, it is possible to make the movable element travel back and forth in a favorable manner over a long period. Also, it is possible to improve the freedom of the arm portions 516c, and it is possible to readily make the entire circumference of the arm portions 516c undergo elastic deformation.

Also, because it is possible to attach by chamfering of the outer circle 516b, it is possible to inhibit the occurrence of play.

Also, in the case of threadably mounting via attachment holes that are formed in the springs in the conventional way, it is necessary to further attach a spacer component for ensuring a region of elastic deformation of the arm, but in the blade spring 516 of the present embodiment, since it is possible to fix the blade springs 516 at the outer circle 516b, it is possible to make the arm portions 516c readily undergo elastic deformation in the inner regions of the outer circle 516b without attaching a spacer component. For this reason, it is possible to reduce the number of parts of the linear actuator, and possible to reduce the cost.

Furthermore, when the spacer component is moreover attached in the conventional manner, an enlargement results in the direction of the reciprocal movement, however, the blade spring 516 of the present embodiment, there is no need to provide the spacer component, so it is possible to improve the utilization efficiency of the space in the direction of the reciprocal movement.

In addition, in the case of a conventional blade spring, during fixing it is not possible to accurately perform attachment without using a tool, but according to the blade spring 516 of the present embodiment, by utilizing the outer edge portion of the outer circle 516b, it is possible to perform attachment with a high degree of accuracy without using a tool.

Also, a plurality of blade springs are sometimes used in layers, and in this case, in order to make the arms undergo appropriate elastic deformation, it has conventionally been necessary to make connections at portions of the arms. For that reason, the connected portions among blade springs become smaller, and so there is difficulty in connecting a plurality of blade springs. According to the blade spring 516 of the present embodiment, since it is possible to carry out connection over the entire circumference of the outer circle 516, it is possible to enlarge the connection area. For that reason, it is possible to readily integrate a plurality of blade springs 516, and it is possible to increase the connection strength. Also, it is possible to simplify handling of a plurality of the blade springs 516 as a unified body.

Note that in the present embodiment, the outer annular portion was made a circular shape, but it is not limited thereto, and the shape may be suitably changed. For example, as the outer annular shape, it may be formed into a polygonal shape including a rectangle.

Also, the blade springs 516 were attached to the outer movable linear actuator, but is not limited thereto, and may be attached to an inner movable linear actuator. In this case, needless to say that which the outer circle 516b is fixed to becomes the stator, and that which is connected to the inner circle 516a becomes the movable element.

Also, the linear actuator may be for example a voice coil type, a moving coil type, or a linear solenoid type.

Note that in the embodiments above the case was described of the spacer being laminated steel plates, but it may also be a hollow tube. In that case, a separate means is required for coupling the outer core and the spacer. As a coupling means, it is possible to use a bolt or a coupling mechanism of the other end. For example, it is possible to insert and fix an outer core, spacer in the hollow tube that regulates the outermost periphery. Furthermore, if a blade spring is pressed in and fitted in the hollow tube, it is possible to omit the spacer.

### INDUSTRIAL APPLICABILITY

As described above, according to the present invention, it is possible to reduce the vibration amplitude of the seat portion and the steering wheel portion and improve riding comfort in a vehicle in which an engine is mounted, such as an automobile

## Claims

1. An automobile vibration damping device for an automobile in which a power plant in which an engine, a transmission and the like are combined is supported by a vehicle body with an engine mount with the object of cutting off vibration, comprising a vibrating means that generates vibration separate from vibration of the engine.

2. The automobile vibration damping device according to claim 1, wherein the vibrating means is arranged at a separate position from the engine that is supported by the engine mount.

3. The automobile vibration damping device according to claim 1, wherein a plurality of the vibrating means are arranged.

4. The automobile vibration damping device according to claim 1, wherein the vibrating means vibrates an auxiliary mass that is attached to a linear actuator.

5. The automobile vibration damping device according to claim 1, wherein the vibrating means operates when the engine is idling and the vehicle speed is zero.

6. The automobile vibration damping device according to claim 1, wherein the vibrating means is attached to a vehicle body frame.

7. The automobile vibration damping device according to claim 1, wherein the vibrating means is attached to the rear end portion of a vehicle body frame.

8. The automobile vibration damping device according to claim 1, wherein the vibrating means is attached to a bumper attachment portion.

9. The automobile vibration damping device according to claim 1, wherein the vibrating means is attached to the inside of a bumper.

10. The automobile vibration damping device according to claim 1, wherein the vibrating means is attached to the inside of a trunk.

11. The automobile vibration damping device according to claim 1, wherein the vibrating means is attached to below a seat.

12. The automobile vibration damping device according to claim 3, wherein two of the vibrating means are installed and are driven with mutually independent phases.

13. The automobile vibration damping device according to claim 3, wherein a plurality of the vibrating means are installed and are driven with mutually different phases.

14. The automobile vibration damping device according to claim 1, wherein a reference signal of a vibration signal is any of an ignition current, a distributor current, a spark plug current, an engine speed pulse, an engine vibration waveform, and fuel injection timing.

15. The automobile vibration damping device according to claim 1, wherein the vibrating means is driven with a predetermined time lag with respect to a reference signal of a vibration signal.

16. The automobile vibration damping device according to claim 1, wherein the vibration force of the vibrating means is changed by any of the accelerator opening degree, a change in the air intake amount, the fuel injection amount and the engine speed.

17. The automobile vibration damping device according to claim 1, wherein driving of the vibrating means is stopped with a predetermined engine speed serving as an upper limit.

18. The automobile vibration damping device according to claim 17, wherein the predetermined engine speed is 1,500 rpm.

19. The automobile vibration damping device according to claim 1, wherein driving of the vibrating means is stopped outside a predetermined engine speed range.

20. The automobile vibration damping device according to claim 19, wherein a lower limit value of the predetermined engine speed is 500 to 1,200 rpm, and an upper limit value is 1,400 to 4,000 rpm.

21. The automobile vibration damping device according to claim 4, wherein the auxiliary mass is a component part of the automobile that is supported by a spring element with respect to the vehicle body of the automobile, and the component part vibrates by the linear actuator.

22. The automobile vibration damping device according to claim 21, wherein the component part is any of a radiator, a tank, and a battery.

23. The automobile vibration damping device according to claim 4, wherein the auxiliary mass is an accessory of the automobile that is supported by a spring element with respect to the vehicle body of the automobile, and the accessory vibrates by the linear actuator.

24. The automobile vibration damping device according to claim 23, wherein the accessory is either of a spare tire and a tool.

25. The automobile vibration damping device according to claim 1, wherein the vibrating means is attached to the vehicle body frame in the vicinity of the engine mount or directly under the engine mount.

26. The automobile vibration damping device according to claim 14, wherein the reference signal of the vibration signal is input via a communication network that is provided in the automobile.

27. An automobile vibration damping device for an automobile in which a power plant in which an engine, a transmission and the like are combined is supported by a vehicle body with an engine mount with the object of cutting off vibration, comprising:
a vibrating means for vibrating an auxiliary mass that is supported by an actuator in a direction that is perpendicular to the direction of vibration of the vehicle body; and
a control means for controlling the operation of the actuator.

28. The automobile vibration damping device according to claim 27, wherein a plurality of the vibrating means are arranged.

29. The automobile vibration damping device according to claim 27, wherein the vibrating means operates when the engine is idling and the vehicle speed is zero.

30. The automobile vibration damping device according to claim 27, wherein the vibrating means is attached to a vehicle body frame.

31. The automobile vibration damping device according to claim 27, wherein the vibrating means is attached to the rear end portion of a vehicle body frame.

32. The automobile vibration damping device according to claim 27, wherein the vibrating means is attached to a bumper attachment portion.

33. The automobile vibration damping device according to claim 27, wherein the vibrating means is attached to the inside of a bumper.

34. The automobile vibration damping device according to claim 27, wherein the vibrating means is attached to the inside of the trunk.

35. The automobile vibration damping device according to claim 27, wherein the vibrating means is attached to below a seat.

36. The automobile vibration damping device according to claim 28, wherein two of the vibrating means are installed and are driven with mutually opposite phases.

37. The automobile vibration damping device according to claim 28, wherein a plurality of the vibrating means are installed and are driven with mutually different phases.

38. The automobile vibration damping device according to claim 27, wherein the control means controls the operation of the actuator based on a reference signal of any of an ignition current, a distributor current, a spark plug current, an engine speed pulse, an engine vibration waveform, and fuel injection timing.

39. The automobile vibration damping device according to claim 38, wherein the vibrating means is driven with a predetermined time lag with respect to the reference signal.

40. The automobile vibration damping device according to claim 27, wherein the vibration force of the vibrating means is changed by an accelerator opening degree, a change in the air intake amount, and a fuel injection amount.

41. The automobile vibration damping device according to claim 27, wherein driving of the vibrating means is stopped with a predetermined engine speed serving as an upper limit.

42. The automobile vibration damping device according to claim 41, wherein the predetermined engine speed is 1,500 rpm.

43. The automobile vibration damping device according to claim 27, wherein driving of the vibrating means is stopped outside a predetermined engine speed range.

44. The automobile vibration damping device according to claim 43, wherein a lower limit value of the predetermined engine speed is 500 to 1,200 rpm, and an upper limit value is 1,400 to 4,000 rpm.

45. The automobile vibration damping device according to claim 27, wherein the vibrating means is attached in the vicinity of the engine mount.

46. The automobile vibration damping device according to claim 27, wherein the auxiliary mass that is supported in the actuator is a component part or accessory of the automobile that is supported by a spring element with respect to the vehicle body.

47. A vibration damping device comprising:
an auxiliary mass member that is supported by a spring element;
an actuator that drives the auxiliary mass member;
a control means that outputs to the actuator a control signal for performing vibration control using a reaction force in the case of driving the auxiliary mass member with the actuator; and
an offset correcting means that adds to the control signal a direct current that corrects a shift in the neutral position of the actuator due to the self weight of the auxiliary mass.

48. A control method for a vibration damping device comprising an auxiliary mass member that is supported by a spring element; an actuator that drives the auxiliary mass member; and a control means that outputs to the actuator a control signal for performing vibration control using a reaction force in the case of driving the auxiliary mass member with the actuator;
the control method adding to the control signal a direct current that corrects a shift in the neutral position of the actuator due to the self weight of the auxiliary mass.

49. A vibration damping device comprising:
a stator;
a movable element having an iron member and provided so as to be capable of reciprocal movement with respect to the stator, with an auxiliary mass member joined to one end;
permanent magnets providing magnetic poles opposed to the iron member and orthogonal to the direction of the reciprocal movement and provided at the stator along the direction of the reciprocal movement;
a movable element support means that supports the movable element by a spring element;
coils that are provided on the stator; and
a control means that controls an electric current applied to the coils in order to suppress vibration of a vibration damping target using a reaction force when the auxiliary mass member is driven;
wherein the permanent magnets are constituted to be arranged closer to the upper side of an axial direction position in a reciprocal movement range of the iron member and not arranged at the lower side, so that a magnetomotive force is unsymmetrically formed.

50. An offset correcting method for a vibrating damping device comprising:
a stator;
a movable element having an iron member and provided so as to be capable of reciprocal movement with respect to the stator, with an auxiliary mass member joined to one end;
permanent magnets providing magnetic poles opposed to the iron member and orthogonal to the direction of the reciprocal movement and provided at the stator along the direction of the reciprocal movement;
a movable element support means that supports the movable element by a spring element;
coils that are provided on the stator; and
a control means that controls an electric current applied to the coils in order to suppress vibration of a vibration damping target using a reaction force when the auxiliary mass member is driven;
wherein the permanent magnets are constituted to be arranged closer to the upper side of an axial direction position in a reciprocal movement range of the iron member and not arranged at the lower side, so that a magnetomotive force is unsymmetrically formed.

51. A blade spring that elastically supports a stator and a movable element of a linear actuator coaxially and concentrically and in a manner enabling reciprocal movement, comprising:
an inner annular portion that is fixed to the stator or the movable element;
an outer annular portion that is provided at the outer periphery of the inner annular portion; and
an arm portion that connects the inner annular portion and the outer annular portion in an inner region of the outer annular portion and elastically deforms so that the stator or the movable element moves in a reciprocal manner.

52. The blade spring according to claim 51, wherein the arm portion is annularly formed.

53. The blade spring according to claim 51, wherein a plurality of the arm portions are provided and symmetrically arranged sandwiching the inner annular portion.
